# EUROPEAN PATENT SPECIFICATION

(11) **EP 3 217 620 B1**
(45) Date of publication and mention of the grant of the patent: **25.03.2020**
(21) Application number: 15856587.9
(22) Date of filing: 03.11.2015
(51) Int. Cl.: H04L 29/06, H04L 9/08, H04W 12/04, H04W 12/06, H04W 12/10

(54) **DATA INTERACTION METHOD AND SYSTEM**
DATENINTERAKTIONSVERFAHREN UND -SYSTEM
PROCÉDÉ ET SYSTÈME D'INTERACTION DE DONNÉES

(30) Priority: 07.11.2014 CN 201410643056; 07.11.2014 CN 201410643670; 03.02.2015 CN 201510054772; 03.02.2015 CN 201510055973
(43) Date of publication of application: 13.09.2017
(73) Proprietor: Tendyron Corporation, Beijing 100083 (CN)
(72) Inventor: LI, Dongsheng, Beijing 100083 (CN)
(74) Representative: advotec.
(86) International application number: PCT/CN2015/093729
(87) International publication number: WO 2016/070799

(56) References cited:
- WO-A1-2013/112839
- CN-A- 102 610 043
- CN-A- 103 903 369
- US-A1- 2012 091 199
- US-A1- 2012 300 932
- US-A1- 2013 030 997

## Description

### FIELD

The present disclosure relates to electronic information security technology field, and more particularly to a data interaction method and a data interaction system.

### BACKGROUND

During transaction process in the related art, such as withdrawal or purchasing by cards, users usually need to carry bank cards got from banks with them, which may have a certain security risk. Once the bank card is lost, it is easy to result in loss to the user's assets. In addition, due to the various types of bank cards, a user may simultaneously have multiple bank cards from different banks. It is not convenient if all the plurality of bank cards from different banks are carried with the user. If for convenience, only some of the plurality of bank cards from different banks are carried with the user, there may be inter-bank transactions when using these bank cards for withdrawal or purchasing by cards, which may result in unnecessary costs incurred in the transaction.

Therefore, there is an urgent need to provide a transaction solution that is convenient for the user's carrying and has high security.

US 2013/030997 A1 discloses universal cards used in place of all the other traditional cards which a person may want to carry.

US 2012/300932 A1 discloses systems and methods for encrypting mobile device communications.

WO 2013/112839 A1 discloses universal cards used in place of all the other traditional cards which a person may want to carry.

### SUMMARY

The present disclosure seeks to solve the above problems.

An objective of the present disclosure is to provide a data interaction method.

In order to achieve the above objective, technical solutions of the present disclosure are specifically realized as follows.

According to embodiments of the present disclosure, a data interaction method is provided. The method includes: obtaining a real card information list of smart cover end by a smart cover, wherein the real card information list of smart cover end is a real card information list of real card manager end obtained by the smart cover from a real card manager, and the real card information list of real card manager end includes real card information of real cards connected to the real card manager; prompting the real card information list of smart cover end by the smart cover; receiving a real card selecting instruction by the smart cover, determining a selected real card by the card sheath, and receiving first data sent from a transaction terminal by a simulation card, and sending the first data to the smart cover by the simulation card; prompting the first data by the smart cover, receiving a confirming instruction for confirming that the first data is correct by the smart cover, and sending the first data to the real card manager by the smart cover; and receiving the first data sent from the smart cover by the real card manager, and sending the first data to the selected real card by the real card manager.

In addition, the data interaction method further includes: establishing a secure connection between the smart cover and the simulation card, and obtaining a first secure transmission key of smart cover end and a secure transmission key of simulation card end for secure data transmission between the smart cover and the simulation card.

In addition, the data interaction method further includes: establishing a secure connection between the smart cover and the real card manager, and obtaining a second secure transmission key of smart cover end and a secure transmission key of real card manager end for secure data transmission between the smart cover and the real card manager.

In addition, before establishing a secure connection between the smart cover and the simulation card, the data interaction method further includes: performing a binding operation bewteen the smart cover and the simulation card.

In addition, before establishing a secure connection between the smart cover and the simulation card, the data interaction method further includes: performing a binding operation between the smart cover and the real card manager.

In addition, before establishing a secure connection between the smart cover and the real card manager, the data interaction method further includes: sending a login request to the real card manager by the smart cover; and after establishing a secure connection between the smart cover and the real card manager, further includes: performing a first processing on a received login password by the smart cover using the second secure transmission key of smart cover end to obtain a first processed password, and sending the first processed login password to the real card manager by the smart cover; receiving data sent from the smart cover by the real card manager, performing a second processing on received data by the real card manager using the secure transmission key of real card manager end to obtain second processed data, and verifying a correctness of the second processed data by the real card manager; after the real card manager verifies that the second processed data passes verification, making the smart cover login to the real card manager.

In addition, wherein performing a second processing on received data by the real card manager using the secure transmission key of real card manager end to obtain second processed data and verifying a correctness of the second processed data by the real card manager includes: performing the second processing on the received data by the real card manager using the secure transmission key of real card manager end to obtain a password to be verified; determining, by the real card manger, whether the password to be verified is an alarm password; if the password to be verified is an alarm password, performing an alarm operation by the real card manager after verified the password to be verified successful; if the password to be verified is a login password rather than an alarm password, determining that the password to be verified passes the verification by the real card manager.

In addition, the data interaction method further includes: detecting, by the real card manager, the real cards connected to the real card manager; after the real card manager detects the real cards connected to the real card manager, obtaining real card information of the real cards by the real card manager, wherein the real card information includes at least a card number; after the real card manager obtains the real card information of the real cards, generating the real card information list of real card manager end by the real card manager.

In addition, the data interaction method further includes: generating an identification list of real card manager end by the real card manager, wherein identifications in the identification list of real card manager end have a one-to-one correspondence with the real card information in the real card information list of real card manager end.

In addition, receiving a real card selecting instruction by the smart cover and determining a selected real card by the smart cover includes: receiving the real card selecting instruction by the smart cover, and obtaining a selected identification by the smart cover, in which the selected identification is configured to indicate the selected real card; sending the selected identification to the real card manager by the smart cover; determining the selected real card corresponding to the selected identification by the real card manager from the real cards connected to the real card manager according to the selected identification.

In addition, the real card manager sets ON and/or OFF for read and write access to the real card information of the real cards connected to the real card manager according to security levels of the real cards.

In addition, the smart cover is a mobile device.

In addition, the smart cover is a combination of a mobile device and an electronic signature token, or the smart cover is an electronic signature token.

Another objective of the present disclosure is to provide a data interaction system.

In order to achieve the above objective, technical solutions of the present disclosure are specifically realized as follows.

According to embodiments of the present disclosure, a data interaction system is provided. The system includes a simulation card, a smart cover and a real card manager. The smart cover is configured to obtain a real card information list of smart cover end, to prompt the real card information list of smart cover end, to receive a real card selecting instruction, and to determine a selected real card, in which the real card information list of smart cover end is a real card information list of real card manager end obtained by the smart cover from the real card manager, and the real card information list of real card manager end includes real card information of real cards connected to the real card manager. The simulation card is configured to receive first data sent by a transaction terminal, and to send the first data to the smart cover. The smart cover is further configured to prompt the first data, to receive a confirming instruction for confirming that the first data is correct, and to send the first data to the real card manager. The real card manager is configured to receive the first data sent by the smart cover, and to send the first data to the selected real card.

It can be seen from the above technical solutions of the present disclosure that, with the data interaction method and the data interaction system, data interaction among the simulation card, the smart cover and the real card manager can by realized, thus providing a new transaction solution that is not only convenient for the user's carrying but also has high security.

### BRIEF DESCRIPTION OF THE DRAWINGS

In order to make technique solutions according to embodiments of the present disclosure more apparent, drawings needed to be used in descriptions of the embodiments will be illustrated in the following. Obviously, the drawings to be illustrated in the following only represent some embodiments of the present disclosure, and other drawings can be obtained according these drawings by skilled in the art without making creative labors.
Fig. 1 is a flow chart of a data interaction method according to an embodiment of the present disclosure;
Fig. 2 shows a block diagram of a data interaction system according to an embodiment of the present disclosure;
Fig. 3 is a flow chart of a first data updating method according to an embodiment of the present disclosure;
Fig. 4 is a flow chart of a second data updating method according to an embodiment of the present disclosure;
Fig. 5 is a flow chart of a third data updating method according to an embodiment of the present disclosure;
Fig. 6 is a flow chart of a fourth data updating method according to an embodiment of the present disclosure;
Fig. 7 is a flow chart of a first manner for establishing a secure connection between a smart cover and a simulation card according to an embodiment of the present disclosure;
Fig. 8 is a flow chart of a second manner for establishing a secure connection between a smart cover and a simulation card according to an embodiment of the present disclosure;
Fig. 9 is a flow chart of a first manner for establishing a secure connection between a smart cover and a real card manager according to an embodiment of the present disclosure;
Fig. 10 is a flow chart of a second manner for establishing a secure connection between a smart cover and a real card manager according to an embodiment of the present disclosure;
Fig. 11 is a flow chart of performing a binding operation between a smart cover and a simulation card according to an embodiment of the present disclosure;
Fig. 12 is a flow chart of performing a binding operation between a smart cover and a real card manager according to an embodiment of the present disclosure;
Fig. 13 is a flow chart of updating an application of a smart cover according to an embodiment of the present disclosure;
Fig. 14 is a flow chart of updating an application of a simulation card according to an embodiment of the present disclosure;
Fig. 15 is a flow chart of updating an application of a real card manager according to an embodiment of the present disclosure.

### DETAILED DESCRIPTION

Technical solutions of embodiments of the present disclosure will be described clearly and completely with reference to the drawings, and obviously, only part of embodiments are described herein. All other embodiments may be obtained by those skilled in the art based on the embodiments described, without any creative effort, and belong to the protection scope of the present disclosure.

In the description of the present disclosure, it should be understood that terms such as "central," "longitudinal," "lateral," "upper," "lower," "front," "rear," "left," "right," "vertical," "horizontal," "top," "bottom," "inner," and "outer," should be construed to refer to the orientation as then described or as shown in the drawings under discussion. These relative terms are for convenience of description and do not require that the present disclosure be constructed or operated in a particular orientation. In addition, terms such as "first" and "second" are used herein for purposes of description and are not intended to indicate or imply relative importance or significance.

In the description of the present disclosure, it should be noted that, unless specified or limited otherwise, the terms "mounted," "connected," and "coupled" and the like are used broadly, and may be, for example, fixed connections, detachable connections, or integral connections; may also be mechanical or electrical connections; may also be direct connections or indirect connections via intervening structures; may also be inner communications of two elements, which can be understood by those skilled in the art according to specific situations.

Embodiments of the present disclosure will be further described in detail with reference to the drawings.

The present disclosure provides a data interaction architecture, so as to provide a transaction solution that is not only convenient for users' carrying, but also has high security. The data interaction architecture includes a simulation card, a smart cover, and a real card manager.

There may be one or more simulation cards. The simulation card may be a card that is individually manufactured or a real card having a reserved simulation card function. The simulation card has the same size as an existing bank card, and replaces real cards to complete transaction in the present data interaction architecture. The simulation card has a contact interface and/or a contactless interface, so as to complete transaction in cooperation with an existing transaction terminal (such as an ATM (Automatic Teller Machine), a POS, and a recharge machine for bus cards). The simulation card may also have a wireless interface, and the simulation card can perform data interaction with the smart cover via this wireless interface. The contact interface may include contacts, and the contactless interface may be an NFC (Near Field Communication) interface, and the wireless interface may be a Bluetooth interface, an infrared interface, a 2.4GHz interface, a WIFI interface or a RFID (Radio Frequency Identification Devices) interface.

There may be one or more smart covers. Each smart cover may manage one or more simulation cards. Each simulation card belongs to and is managed by only one smart cover. The smart cover may be an individually manufactured device having a shape of a card holder, or a mobile device with a function of the smart cover in the present data interaction architecture, including a smart phone, a tablet computer (such as a PAD), a PDA (such as a palmtop, a learning machine), a laptop, an electronic book reading device, a wearable device (such as a smart watch, smart glasses) and the like. The smart cover may include a contact interface and/or a contactless interface, so as to perform data interaction in cooperation with the contact interface and/or the contactless interface of the simulation card. The smart cover may also include a wireless interface, so as to perform data interaction with corresponding interface of the simulation card via this wireless interface. The contact interface may include contacts, and the contactless interface may be an NFC interface, and the wireless interface may be a Bluetooth interface, an infrared interface, a 2.4GHz interface, a WIFI interface or a RFID interface. The smart cover may also include a network interface, so as to perform data interaction with corresponding network interface of the real card manager via this network interface. The network interface may be a WIFI interface, a mobile internet interface (such as 3G network and 4G network). In addition, the smart cover may also be a combination of the mobile device and an electronic signature token, in which the network interface of the smart cover is realized by the network interface of the mobile device, and other interfaces (such as the wireless interface, the contact interface and/or the contactless interface) may be located in the electronic signature token, or the other interfaces may also be located in the mobile device, or some of the other interfaces may be located in the electronic signature token and some of the other interfaces may be located in the mobile device. All the processing operations performed by the smart cover are performed on the electronic signature token. The smart cover may also be the electronic signature token only. The electronic signature token may be a key device, such as a U type shield of Industrial and Commercial Bank of China and a USB-key of Agricultural Bank of China.

The real card manager can manage multiple smart covers. The real card manager includes multiple contact interfaces (such as card slots) and/or contactless interfaces (such as NFC interfaces), so as to facilitate that the real card manager can be connected to different types of real cards in different ways. The real card manager is connected to at least one real card, and stores a real card information list of real card manager end. The real card information list of real card manager end includes real card information of real cards that are connected to the real card manager. The real card information may include information such as card numbers and card authentication information and so on. The card authentication information is card information used to authenticate whether a real card is issued by a regular channel (such as banks and bus companies). The real card may be a function card (such as a bus card, a dining card, a shopping card, a membership card, a scorecard, etc.) or a bank card issued by a bank. Alternatively, the real card manager may be set to store real card information of all or part of the real cards that are connected to the real card manager, so that a user can make different settings according to security requirements of the real cards. For example, it can be set in the real card manager that obtaining real card information of some real cards is not allowed, thus ensuring security of these real cards. The real card manager may also include a network interface, so as to perform data interaction with corresponding network interface of the smart cover via this network interface. The network interface may be a WIFI interface, a mobile internet interface (such as 3G network and 4G network), or the like.

In the present data interaction architecture, both the simulation card and the real cards are smart chip cards.

Terms in the present disclosure are explained as follows.

A first processing includes an encryption processing, and a second processing includes a decryption processing. Specifically, encryption alone ensures security of data transmission. When security level of data to be transmitted is required high, this way can be used to process the data to be transmitted.

Or, the first processing includes a verification calculating processing, and the second processing includes a verification validation calculating processing. Specifically, verification alone ensures integrity of data transmission, preventing tampering. When integrity level of the data to be transmitted is required high, this way can be used to process the data to be transmitted.

Or, the first processing includes an encryption and verification calculating processing, and the second processing includes a decryption and verification validation calculating processing. Specifically, security and integrity of data transmission are ensured by using a combination of the encryption and the verification. When security level of the data to be transmitted is required the highest, this way can be used to process the data to be transmitted.

Based on the above data interaction architecture, with the data interaction method according to the present disclosure, data interaction among the simulation card, the smart cover and the real card manager can by realized, thus providing a new transaction solution that is not only convenient for the user's carrying but also has high security.

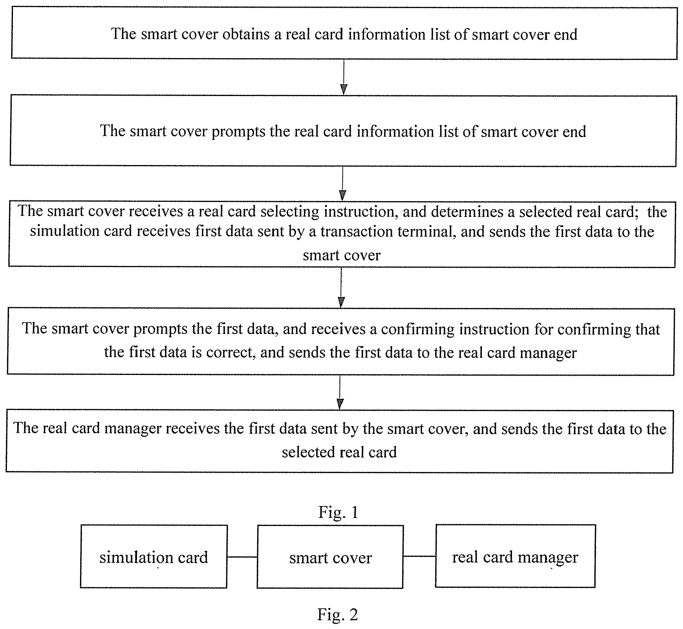

Fig. 1 is a flow chart of a data interaction method according to an embodiment of the present disclosure. Referring to Fig. 1, the data interaction method according to the present disclosure includes following operations.

The smart cover obtains a real card information list of smart cover end. The real card information list of smart cover end is a real card information list of real card manager end that the smart cover obtains from the real card manager. The real card information list of real card manager end includes real card information of real cards that are connected to the real card manager.

The smart cover prompts the real card information list of smart cover end.

The smart cover receives a real card selecting instruction, and determines a selected real card. The simulation card receives first data sent by a transaction terminal, and sends the first data to the smart cover.

The smart cover prompts the first data, and receives a confirming instruction for confirming that the first data is correct, and sends the first data to the real card manager.

The real card manager receives the first data sent by the smart cover, and sends the first data to the selected real card.

Fig. 2 shows a block diagram of a data interaction system according to an embodiment of the present disclosure. Referring to Fig. 2, the data interaction system according to the present disclosure includes a simulation card, a smart cover, and a real card manager.

The smart cover is configured to obtain a real card information list of smart cover end, to prompt the real card information list of smart cover end, to receive a real card selecting instruction, and to determine a selected real card. The real card information list of smart cover end is a real card information list of real card manager end that the smart cover obtains from the real card manager, and the real card information list of real card manager end includes real card information of real cards that are connected to the real card manager.

The simulation card is configured to receive first data sent by a transaction terminal, and to send the first data to the smart cover.

The smart cover is further configured to prompt the first data, to receive a confirming instruction for confirming that the first data is correct, and to send the first data to the real card manager.

The real card manager is configured to receive the first data sent by the smart cover, and to send the first data to the selected real card.

In the following, the above data interaction method or system will be described in detail. It should be understood that following embodiments can be applied in either method embodiments or system embodiments. Specifically, the data interaction method or system may include following aspects.

### I. generating and updating the real card information list of real card manager end

Before the smart cover obtains the real card information list of smart cover end, the real card manager generates the real card information list of real card manager end in following manners. Certainly, the present is not limited thereto.

The real card manager detects the real cards that are connected to the real card manager. Specifically, the real card manager detects the contact interface and/or the contactless interface set thereon, so as to determine whether there is a real card connected to the real card manager. The real card manager may detect in turn whether there is a real card connected thereto, or the real card manager may simultaneously detect whether there is a real card connected thereto. Alternatively, the real card manager may be set to store real card information of all or part of the real cards that are connected to the real card manager, so that a user can make different settings according to security requirements of the real cards. For example, it can be set in the real card manager that obtaining real card information of some real cards is not allowed, thus ensuring security of these real cards.

After detecting the real cards connected to the real card manager, the real card manager obtains the real card information of the real cards. The real card information at least includes a card number. Specifically, when detecting the real card connected thereto, the real card manager reads real card information stored in the real card connected thereto. Finally, the real card manager obtains the real card information of all real cards that are connected to the real card manager. In addition, the real card information may include card authentication information and an issuer ID of the real card, in addition to the card number.

After obtaining the real card information of the real cards, the real card manager generates the real card information list of real card manager end. Specifically, after obtaining the real card information of the real cards connected thereto, the real card manager generates the real card information list of real card manager end, so that the smart cover can subsequently obtain the real card information list of real card manager end, which is convenient for subsequent use. Alternatively, what the real card manager can obtain is the real card information that the user sets to be allowed to be obtained.

In addition, the real card manager further generates an identification list of real card manager end in addition to the real card information list of real card manager end. Identifications in the identification list of real card manager end have a one-to-one correspondence with the real card information in the real card information list of real card manager end. Specifically, each of the identifications in the identification list of real card manager end may uniquely identify a corresponding real card. Each of the identifications may be an identification that indicates whether there is a real card connected to the contact interface and/or the contactless interface (for example, 1 represents that there is a real card connected to the contact interface and/or the contactless interface, and 0 represents that there is no real card connected to the contact interface and/or the contactless interface), or each of the identifications may be one item of information such as an issuer number of a real card (for example, if the real card is a bank card, the issuer number may be a bank number), a tail number of a card number of the real card, a check value (such as a CRC check value) of a card number of the real card, or any combination thereof. The real card manager generates the identification list of real card manager end, so that it is convenient for the smart cover to update the real card information list subsequently.

Certainly, the real card manager may re-detect and generate the real card information list of real card manager end every time the real card manager is powered on. Or, the real card manager may regenerate the real card information list of real card manager end after a real card detection is triggered by a function button (a physical button or a virtual button) provided by the real card manager. Or, the real card manager may perform an operation of adding and/or deleting real card information to the real card information list every time the real card manager detects insertion or extraction of a real card, or entrance or exit of a real card.

Alternatively, the real card manager may be set to store real card information of all or part of the real cards that are connected to the real card manager, so that a user can make different settings according to security requirements of the real cards. For example, it can be set in the real card manager that obtaining real card information of some real cards is not allowed, thus ensuring security of these real cards.

Specifically, the real card manager may classify the contact interfaces and/or the contactless interfaces into a common card region and an important card region according to different usage safety factors. For example, a small account card, a secondary card, a bus card and other real cards of the user related to small amount of money are connected to interfaces in the common card region, while the large account card, a principal card of a credit card and other real cards of the user related to large amount of money are connected to interfaces in the important card region.

After classifying the contact interfaces and/or the contactless interfaces, the real card manager can read the common card region in which obtaining real card information of real cards is allowed, so as to obtain the real card information of real cards connected to interfaces in the common card region. The real card manager can not read the important card region in which obtaining the real card information of real cards is not allowed, and thus the real card information of real cards connected to interfaces in the important card region can not be obtained. Therefore, the real card information list of real card manager end generated by the real card manager can only include the real card information of the real cards connected to interfaces in the common card region. The smart cover can obtain the real card information of the real cards connected to interfaces in the common card region rather than the real card information of the real cards connected to interfaces in the important card region. For example, the real cards connected to interfaces in the common card region are visible to the smart cover, and the smart cover can be directly connected thereto for use. The real cards connected to interfaces in the important card region are invisible to the smart cover, and the smart cover can not be directly connected thereto for use. If there is a need to connect with the real cards connected to interfaces in the important card region for use, one of following manners can be used to set the real cards connected to interfaces in the important card region, so that the smart cover can be connected to all or part of the real cards connected to interfaces in the important card region for use.

In manner 1, after the user inputs a login password, the smart cover only has an authority of connecting to and using all the real cards connected to interfaces in the common card region, but does not have an authority of connecting to and using a real card connected to interfaces in the important card region. If there is a need to connect to and use the real cards connected to interfaces in the important card region, a physical button may be set on the real card manager, or a virtual button may be set on the real card manager, or a function menu may be set on the real card manager, so that the user can set the authority of the smart cover connecting to and using the real cards connected to interfaces in the important card region on the real card manager. For example, the user may manually open the authority of the smart cover to connect to and to use all or part of the real cards connected to interfaces in the important card region by pressing the physical button, the virtual button, or an option in the function menu, and thus the smart cover can be connected to and use the real cards connected to interfaces in the important card region whose authority is opened.

In manner 2, after the user inputs a login password, the smart cover only has an authority of connecting to and using all the real cards connected to interfaces in the common card region, and does not have an authority of connecting to and using a real card connected to interfaces in the important card region. If there is a need to connect to and use the real cards connected to interfaces in the important card region, a client may be set on the real card manager, or a control terminal (such as a PC, a smart phone, a tablet computer) connected to the real card manager may be set, and a client is set on the control terminal. The user sets the authority by logging into the client to open or close the authority of the smart cover to connect to and use all or part of the real cards connected to interfaces in the important card region, so that the smart cover can be connected to and use the real cards connected to interfaces in the important card region whose authority is opened.

In manner 3, after the user inputs a login password, the smart cover only has an authority of connecting to and using all the real cards connected to interfaces in the common card region, and does not have an authority to connect to and use a real card connected to interfaces in the important card region. If there is a need to connect to and use the real cards connected to interfaces in the important card region, a authority password may be set on the real card manager. The user can initiate a authority setting request to the real card manager through the smart cover. Only after the real card manager receives the authority setting request and the authority password input by the user, and the authority password input by the user is verified to be correct, the real card manager can open or close the authority of the smart cover to connect to and use all or part of the real cards connected to interfaces in the important card region, so that the smart cover can be connected to and use the real cards connected to interfaces in the important card region whose authority is opened. The authority password is different from the login password and an alarm password. Certainly, if the real card manager verifies that the authority password input by the user is not correct, setting the authority of connecting to and using all or part of the real cards connected to interfaces in the important card region is not executed.

### II. obtaining and updating the real card information list of smart cover end

In the present disclosure, the real card information list of smart cover end obtained by the smart cover is a real card information list of real card manager end obtained from the real card manager.

Updating the real card information list of smart cover end may include following manners.

In manner 1, the real card manager determines whether it is required to update the real card information list of smart cover end.

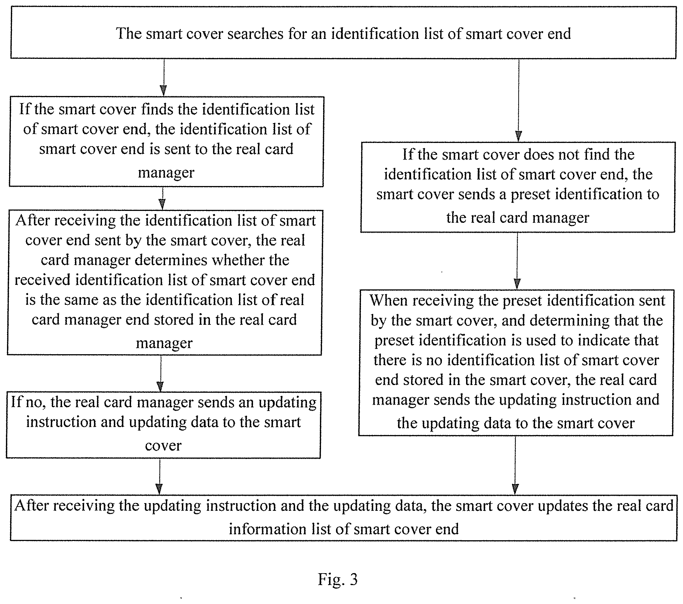

Fig. 3 is a flow chart of a first data updating method according to an embodiment of the present disclosure. It should be understood that, the first data updating method may be realized via the data interaction method or the data interaction system. Referring to Fig. 3, the data updating method according to the present disclosure includes followings.

The smart cover searches for an identification list of smart cover end.

Specifically, the identification list of smart cover end is the identification list of real card manager end obtained from the real card manager by the smart cover.

If the identification list of smart cover end is found, the smart cover sends the identification list of smart cover end to the real card manager. After receiving the identification list of smart cover end sent by the smart cover, the real card manager determines whether the received identification list of smart cover end is the same as the identification list of real card manager end stored in the real card manager. If they are different, the real card manager sends an updating instruction and updating data to the smart cover. After receiving the updating instruction and the updating data, the smart cover updates the real card information list of smart cover end.

Specifically, updating the real card information list of smart cover end may be realized as follows. The updating instruction sent by the real card manager includes an adding and/or deleting instruction, and the updating data includes real card information that needs to be added or to be deleted. After receiving the updating instruction and the updating data, the smart cover performs an adding and/or deleting operation to the real card information list of smart cover end according to the updating instruction and the updating data. Alternatively, the updating instruction sent by the real card manager includes an adding and/or deleting instruction, and the updating data includes an identification corresponding to real card information that needs to be added or to be deleted. After receiving the updating instruction and the updating data, the smart cover performs an adding and/or deleting operation to the real card information list of smart cover end according to the updating instruction and the updating data. Alternatively, the updating instruction sent by the real card manager includes a replacing instruction, and the updating data includes the newest real card information list of real card manager end. After receiving the updating instruction and the updating data, the smart cover perform a replacing operation to the real card information list of smart cover end according to the updating instruction and the updating data.

If the smart cover does not find the identification list of smart cover end, the smart cover sends a preset identification to the real card manager. When receiving the preset identification sent by the smart cover, and determining that the preset identification is used to indicate that there is no identification list of smart cover end stored in the smart cover, the real card manager sends the updating instruction and the updating data to the smart cover. After receiving the updating instruction and the updating data, the smart cover updates the real card information list of smart cover end.

Specifically, updating the real card information list of smart cover end may be realized as follows. The updating instruction sent by the real card manager includes a storing instruction, and the updating data includes the newest real card information list of real card manager end. After receiving the updating instruction and the updating data, the smart cover performs a storing operation to the real card information list of smart cover end according to the updating instruction and the updating data.

Based on the above solutions of the present disclosure, the smart cover sends the identification list of smart cover end to the real card manager for determining whether the identification list of smart cover end is the same as the identification list of real card manager end, and thus data amount of data transmission is reduced, and a data transmission rate is improved, and a determining rate of the real card manager is also improved, since data size of the identification list of smart cover end is much less than that of the real card information list of smart cover end. If the smart cover is used for the first time, the smart cover itself does not store the identification list of smart cover end. At this time, the smart cover sends the preset identification to the real card manager, so that the real card manager issues the identification list of real card manager end and the real card information list of real card manager end to the smart cover. The preset identification may be a null identification, a preset value, or a preset character, or the like.

Certainly, the present disclosure is not limited to the above first data updating method. When neither the smart cover nor the real card manager stores an identification list, updating the real card information list of smart cover end may be realized as follows.

The real card information list of smart cover end is directly sent to the real card manager from the smart cover, so that the real card manager can determine whether or not to perform an updating after comparing the real card information list of smart cover end and the real card information list of real card manager end.

Alternatively, a list number of the real card information list of smart cover end is sent to the real card manager from the smart cover, so that the real card manager can determine whether or not to perform an updating by comparing whether the list number of the real card information list of smart cover end is the same as that of the real card information list of real card manager end.

Alternatively, after receiving an updating instruction input by the user, the real card manager sends the real card information list of real card manager end to the smart cover.

Certainly, after determining that an updating is required, the real card manager may send an updating inquiry request to the smart cover. The smart cover prompts the user of the updating inquiry request, so that the user can determine whether or not to perform an updating.

In manner 2, the smart cover determines whether it is required to perform the updating operation for the real card information list of smart cover end.

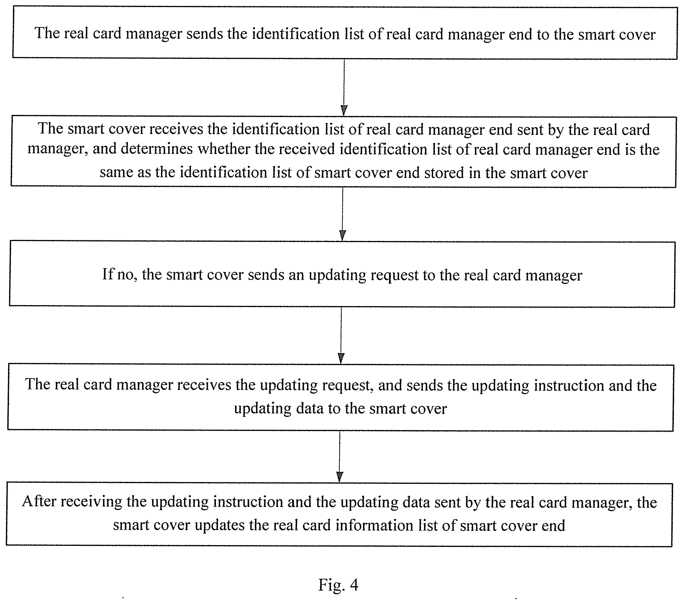

Fig. 4 is a flow chart of a second data updating method according to an embodiment of the present disclosure. It should be understood that, this second data updating method may be realized via the data interaction method or the data interaction system. Referring to Fig. 4, the data updating method according to the present disclosure includes followings.

The real card manager sends the identification list of real card manager end to the smart cover.

The smart cover receives the identification list of real card manager end sent by the real card manager, and determines whether the received identification list of real card manager end is the same as the identification list of smart cover end stored in the smart cover. Specifically, if the smart cover is used for the first time, or the smart cover never successfully downloads the identification list of real card manager end, then the smart cover does not store the identification list of smart cover end, and it can be directly determined that the received identification list of real card manager end is not the same as the identification list of smart cover end stored in the smart cover.

If the received identification list of real card manager end is not the same as the identification list of smart cover end stored in the smart cover, the smart cover sends an updating request to the real card manager.

The real card manager receives the updating request, and sends the updating instruction and the updating data to the smart cover.

After receiving the updating instruction and the updating data sent by the real card manager, the smart cover updates the real card information list of smart cover end. Specifically, updating the real card information list of smart cover end may be realized as follows. The updating instruction sent by the real card manager includes an adding and/or deleting instruction, and the updating data includes real card information that needs to be added or to be deleted. After receiving the updating instruction and the updating data, the smart cover performs an adding and/or deleting operation to the real card information list of smart cover end according to the updating instruction and the updating data. Alternatively, the updating instruction sent by the real card manager includes an adding and/or deleting instruction, and the updating data includes an identification corresponding to real card information that needs to be added or to be deleted. After receiving the updating instruction and the updating data, the smart cover performs an adding and/ or deleting operation to the real card information list of smart cover end according to the updating instruction and the updating data. Alternatively, the updating instruction sent by the real card manager includes a replacing instruction, and the updating data includes the newest real card information list of real card manager end. After receiving the updating instruction and the updating data, the smart cover perform a replacing operation to the real card information list of smart cover end according to the updating instruction and the updating data.

Based on the above solutions of the present disclosure, the real card manager sends the identification list of real card manager end to the smart cover for determining whether the identification list of real card manager end is the same as the identification list of smart cover end, such that data amount of data transmission is reduced, and a data transmission rate is improved, and a determining rate of the smart cover is also improved, since data size of the identification list of real card manager end is much less than that of the real card information list of real card manager end. If the smart cover is used for the first time, the smart cover itself does not store the identification list of smart cover end. At this time, after receiving the identification list of real card manager end issued by the real card manager, the smart cover directly sends the updating request, such that the real card manager can send the real card information list of real card manager end to the smart cover.

Certainly, the present disclosure is not limited to the above solution in manner 2. When neither the smart cover nor the real card manager stores an identification list, updating the real card information list of smart cover end may be realized as follows.

The real card information list of real card manager end is directly sent to the smart cover from the real card manager, so that the smart cover can directly store the real card information list of real card manager end.

Alternatively, a list number of the real card information list of real card manager end is sent to the smart cover from the real card manager, so that the smart cover can determine whether or not to perform an updating by comparing whether the list number of the real card information list of real card manager end is the same as that of the real card information list of smart cover end.

Alternatively, after receiving an updating instruction input by the user, the smart cover sends the updating request to the real card manager, so that the real card manager directly issues the real card information list of real card manager end to the smart cover.

Certainly, after determining that an updating is required, the smart cover may further prompt the user of determining whether or not to perform the updating, and subsequent updating operations can be executed after the user determines the updating.

The smart cover according to the present disclosure further includes a heartbeat sleep mode in addition to a normal operation mode. The heartbeat sleep mode is a non-operating mode with low power consumption, that is, some unnecessary power consumption programs are closed. Specifically, the smart cover may enter the heartbeat sleep mode when there is no operation within a preset period of time, or may be controlled to enter the heartbeat sleep mode according to an operation control of the user.

In manner 3, in the heartbeat sleep mode, the smart cover determines whether it is required to perform an updating operation for the real card information list of smart cover end.

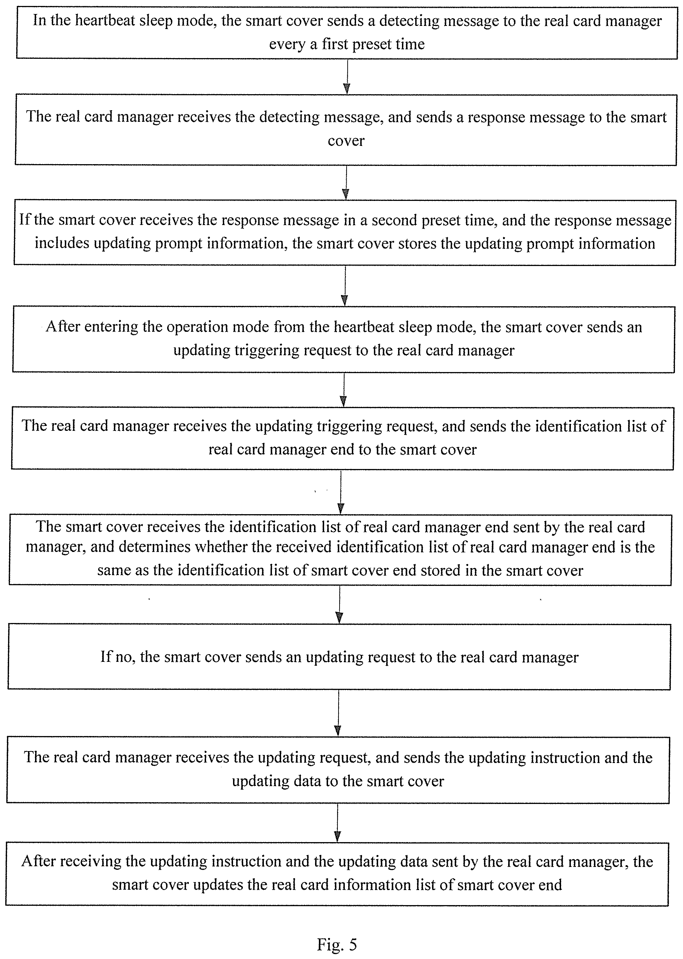

Fig. 5 is a flow chart of a third data updating method according to an embodiment of the present disclosure. It should be understood that, the third data updating method may be realized via the data interaction method or the data interaction system. Referring to Fig. 5, the data updating method according to the present disclosure includes followings.

In the heartbeat sleep mode, the smart cover sends a detecting message to the real card manager every a first preset time.

The real card manager receives the detecting message, and sends a response message to the smart cover.

If the smart cover receives the response message in a second preset time, and the response message includes updating prompt information, the smart cover stores the updating prompt information. The updating prompt information is prompt information that the real card manager prompts the smart cover that there is an update of the real card information list of real card manager end in the real card manager.

After entering the operation mode from the heartbeat sleep mode, the smart cover sends an updating triggering request to the real card manager. Specifically, the smart cover may enter the operation mode from the heartbeat sleep mode through following manners. The smart cover automatically enters the operation mode after receiving the updating prompt information. Or, the smart cover enters the operation mode after receiving an operation instruction input by the user (such as an operation instruction input by the user by pressing a button).

The real card manager receives the updating triggering request, and sends the identification list of real card manager end to the smart cover.

The smart cover receives the identification list of real card manager end sent by the real card manager, and determines whether the received identification list of real card manager end is the same as the identification list of smart cover end stored in the smart cover. Specifically, if the smart cover is used for the first time, or the smart cover never successfully downloads the identification list of real card manager end, then the smart cover does not store the identification list of smart cover end, and it can be directly determined that the received identification list of real card manager end is not the same as the identification list of smart cover end stored in the smart cover.

If the received identification list of real card manager end is not the same as the identification list of smart cover end stored in the smart cover, the smart cover sends an updating request to the real card manager.

The real card manager receives the updating request, and sends the updating instruction and the updating data to the smart cover.

After receiving the updating instruction and the updating data sent by the real card manager, the smart cover updates the real card information list of smart cover end. Specifically, updating the real card information list of smart cover end may be realized by following manners. The updating instruction sent by the real card manager includes an adding and/or deleting instruction, and the updating data includes real card information that needs to be added or to be deleted. After receiving the updating instruction and the updating data, the smart cover performs an adding and/or deleting operation to the real card information list of smart cover end according to the updating instruction and the updating data. Or, the updating instruction sent by the real card manager includes an adding and/or deleting instruction, and the updating data includes an identification corresponding to real card information that needs to be added or to be deleted. After receiving the updating instruction and the updating data, the smart cover performs an adding and/or deleting operation to the real card information list of smart cover end according to the updating instruction and the updating data. Or, the updating instruction sent by the real card manager includes a replacing instruction, and the updating data includes the newest real card information list of real card manager end. After receiving the updating instruction and the updating data, the smart cover perform a replacing operation to the real card information list of smart cover end according to the updating instruction and the updating data.

The first preset time may be the same as or different from the second preset time.

Based on the above solutions of the present disclosure, the real card manager sends the identification list of real card manager end to the smart cover for determining whether the identification list of real card manager end is the same as the identification list of smart cover end, such that data amount of data transmission is reduced, and a data transmission rate is improved, and a determining rate of the smart cover is also improved, since data size of the identification list of real card manager end is much less than that of the real card information list of real card manager end. If the smart cover is used for the first time, the smart cover itself does not store the identification list of smart cover end. At this time, after receiving the identification list of real card manager end issued by the real card manager, the smart cover directly sends the updating request, such that the real card manager can send the real card information list of real card manager end to the smart cover.

Certainly, the present disclosure is not limited to the above solution in manner 3. When neither the smart cover nor the real card manager stores an identification list, updating the real card information list of smart cover end may be realized by one of following manners.

The real card information list of real card manager end is directly sent to the smart cover from the real card manager, so that the smart cover can directly store the real card information list of real card manager end.

Or, a list number of the real card information list of real card manager end is sent to the smart cover from the real card manager, so that the smart cover can determine whether or not to perform an updating by comparing whether the list number of the real card information list of real card manager end is the same as that of the real card information list of smart cover end.

Or, after receiving an updating instruction input by the user, the smart cover sends the updating request to the real card manager, so that the real card manager directly issues the real card information list of real card manager end to the smart cover.

Certainly, after determining that an updating is required, the real card manager may send an updating inquiry request to the smart cover. The smart cover prompts the user of the updating inquiry request, so that the user can determine whether or not to perform the updating.

In manner 4, when the smart cover is in the heartbeat sleep mode, the real card manager determines whether it is required to perform an updating operation for the real card information list of smart cover end.

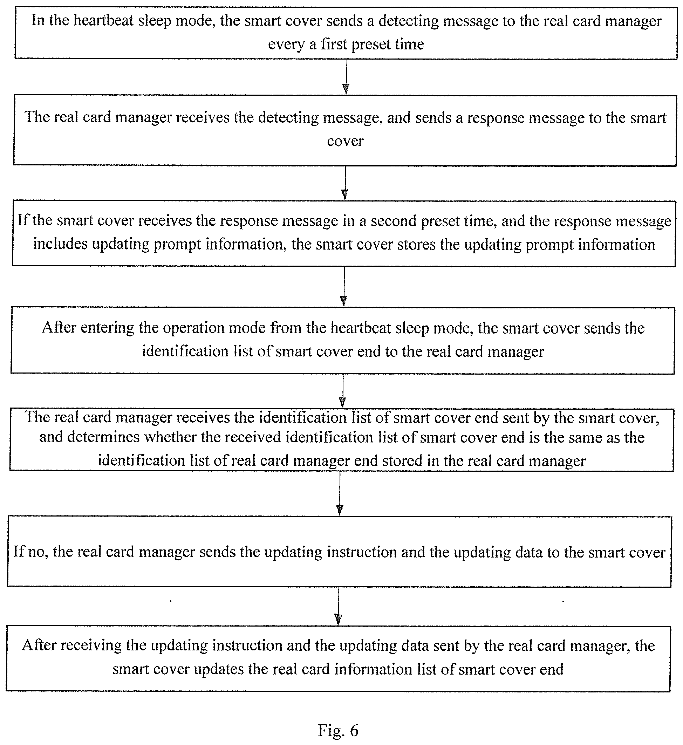

Fig. 6 is a flow chart of a fourth data updating method according to an embodiment of the present disclosure. It should be understood that, the fourth data updating method may be realized via the data interaction method or the data interaction system.

Referring to Fig. 6, a main difference between manner 4 and manner 3 is that the determining is performed by the real card manager rather than the smart cover in manner 4. As illustrated in Fig. 6, the fourth data updating method may include following actions. In the heartbeat sleep mode, the smart cover sends a detecting message to the real card manager every a first preset time. The real card manager receives the detecting message, and sends a response message to the smart cover. If the smart cover receives the response message in a second preset time, and the response message includes updating prompt information, the smart cover stores the updating prompt information. After entering the operation mode from the heartbeat sleep mode, the smart cover sends the identification list of smart cover end to the real card manager. The real card manager receives the identification list of smart cover end sent by the smart cover, and determines whether the received identification list of smart cover end is the same as the identification list of real card manager end stored in the real card manager. If no, the real card manager sends the updating instruction and the updating data to the smart cover. After receiving the updating instruction and the updating data sent by the real card manager, the smart cover updates the real card information list of smart cover end.

Alternatively, after the real card manager opens or closes the authority of the smart cover to connect to and use all or part of the real cards connected to interfaces in the important card region, since the real card information list of real card manager end is updated, the real card manager may send real card information of those real cards which the smart cover has the authority to connect to and use to the smart cover, so that the smart cover updates the real card information list of smart cover end. Or, after the real card manager opens or closes the authority of the smart cover to connect to and use all or part of the real cards connected to interfaces in the important card region, process for updating the real card information list of smart cover end is triggered, in which the updating may be performed with reference to manner 1 and manner 2, which is not elaborated herein.

The updating data sent by the real card manager includes the identification list of real card manager end in addition to the real card information list of real card manager end, so that the smart cover can obtain a newest identification list.

### III. determining the selected real card

The smart cover obtains the real card information list of smart cover end. The real card information list of smart cover end is a real card information list of real card manager end obtained from the real card manager. Alternatively, before this step, operations such as starting up the smart cover, logging into the real card manager by the smart cover may be executed, which is not elaborated herein, and reference may be made to above relative description of starting up the smart cover and logging into the real card manager by the smart cover. In this step, obtaining the real card information list of smart cover end by the smart cover may further include updating the real card information list of smart cover end by the smart cover, which is also not elaborated herein, and reference can made to above relative description of updating the real card information list of smart cover end by the smart cover. After obtaining the real card information list of real card manager end from the real card manager, the smart cover stores the real card information list of real card manager end in a storage area as the real card information list of smart cover end. When it is necessary to prompt (such as display or broadcast) the real card information list of smart cover end, the smart cover can directly obtain the real card information list of smart cover end in local, thus improving the processing speed of the smart cover.

The smart cover prompts the real card information list of smart cover end. Specifically, the smart cover displays the real card information list of smart cover end by its own displaying unit or by means of an external displaying device. Or, the smart cover plays (for example, via a loudspeaker, or via an earphone) the real card information list of smart cover end in form of voice by its own voice playing unit or by means of an external voice playing device. In this way, the user can select the real cards required for the transaction according to the real card information list of smart cover end, thus making it convenient for the user's selection and improving the user experience.

The smart cover receives the real card selecting instruction and determines the selected real card. Specifically, the real card selecting instruction received by the smart cover may be generated by a selective physical button individually provided on the smart cover, or may be generated by a selective virtual button displayed on a touch screen of the smart cover, or may be generated by selecting a menu item representing a selection function in a menu displayed on a screen of the smart cover. The smart cover receives the real card selecting instruction and determines the selected real card. The smart cover realizes data transmission with the selected real card through the real card manager. In addition, determining the selected real card may be realized by following manners. The smart cover receives the real card selecting instruction and obtains a selected identification. The selected identification is configured to indicate the selected real card. The smart cover sends the selected identification to the real card manager. The real card manager determines the selected real card corresponding to the selected identification from the real cards that are connected to the real card manager according to the selected identification. The selected identification may be all or part of the real card information, such as the card number and/or an identification of a read-write port of the real card manager. After receiving the selected identification, the real card manager may search for an identification of a read-write port of the real card manager corresponding to the selected identification in the real card information list of real card manager end, such that the real card manager determines the read-write port thereof, thus performing data interaction with the selected real card through the determined read-write port.

### IV. data interaction

The simulation card receives the first data sent by the transaction terminal, and sends the first data to the smart cover. Specifically, in the data interaction process, the simulation card and the transaction terminal (such as an ATM machine, a POS machine, a recharge machine for bus cards) are connected (through the contact interface and/or the contactless interface). The simulation card receives the first data sent by the transaction terminal. The first data may be data to be processed (such as withdrawal amount, charge amount, real card information obtaining request).

The smart cover prompts the first data, and receives the confirming instruction for confirming that the first data is correct, and sends the first data to the real card manager. Specifically, the smart cover may display the first data, or may play (for example, via a loudspeaker, or via an earphone) the first data in form of voice, so that the user can confirm whether the first data is correct. Only when the first data is correct, and the confirming instruction input by the user is received, the first data is sent to the real card manager. If the user confirms that the first data is incorrect, current data interaction may be directly cancelled. Thus, security of the data interaction is improved. The confirming instruction received by the smart cover may be generated by a physical confirming button individually provided on the smart cover, or may be generated by a virtual confirming button displayed on a touch screen of the smart cover, or may be generated by selecting a confirming function in a menu displayed on a screen of the smart cover, or may be generated after a voice collecting component (such as a microphone) of the smart cover receives and authenticates a voice confirming instruction, or may be generated after a fingerprint collecting component of the smart cover receives and authenticates a fingerprint confirming instruction, or may be generated after an iris collecting component of the smart cover receives and authenticates an iris confirming instruction. Certainly, the confirming instruction may be generated in any other ways, which is not limited in the present disclosure.

The real card manager receives the first data sent by the smart cover, and sends the first data to the selected real card. Specifically, the real card manager sends the first data to the selected real card, so that the selected real card processes the first data. After receiving the first data, the selected real card may process the first data. The processing is the same as the solution in a conventional smart card, which is not elaborated herein.

Based on the above data interaction process, various functions of different types of real cards can be realized by one simulation card. The user can complete the data interaction by just carrying the simulation card and the smart cover, without carrying real cards, thus improving convenience and security.

The smart cover may prompt the information that needs to be confirmed during the data interaction process. Therefore, the interaction can be executed after the user confirms the information that needs to be confirmed during the data interaction process, thus ensuring authenticity of data interaction, and improving security.

In addition, since it is possible to select the real card that matches the transaction terminal for use, unnecessary costs (such as cross-bank withdrawal fees) incurred due to the fact that the user does not carry the real card matching the transaction terminal in the related art can be solved.

Certainly, the above specific embodiments just disclose a single data interaction from the transaction terminal to the real card. In practical application, there may be multiple data interactions, the interaction process of which is similar to the single data interaction. In the multiple data interactions, whether to prompt interactive data at the smart cover can be set according to whether it is necessary to confirm the interactive data, thus ensuring authenticity of the interactive data.

### V. establishing secure connections

Before the smart cover obtains the real card information list of smart cover end, the present disclosure may further include a first process that a secure connection between the smart cover and the simulation card is established, and a first secure transmission key of smart cover end and a secure transmission key of simulation card end for secure data transmission between the smart cover and the simulation card are obtained.

Certainly, the present disclosure may further include a second process that a secure connection between the smart cover and the real card manager is established, and a second secure transmission key of smart cover end and a secure transmission key of real card manager end for secure data transmission between the smart cover and the real card manager are obtained.

Certainly, the above two processes may be executed at a same time, or may be executed at different times. Only one of the above two processes may be executed, or both of the above two processes may be executed.

1. A secure connection between the smart cover and the is established, and a first secure transmission key of smart cover end and a secure transmission key of simulation card end for secure data transmission between the smart cover and the simulation card are obtained.

In the present disclosure, the secure connection between the smart cover and the simulation card may be established by following manners.

In manner 1, the smart cover and the simulation card authenticate each other's identity (for example, authenticate each other's signature data). In the process of authenticating each other's identity, it is compared whether binding factors stored in the two parties are the same. After it is determined that the binding factors stored in the two parties are the same and the mutual authentication is successful, secure transmission keys (the first secure transmission key of smart cover end and the secure transmission key of simulation card end) for secure data transmission between the smart cover and the simulation card are generated.

It should be noted that, if the smart cover and the simulation card authenticate each other's certificate and identity before the secure connection between the smart cover and the simulation card is established, and a binding operation that the smart cover and the simulation card store binding factors generated in authenticating process respectively after the mutual authentication is successful, authenticating each other's identity by the smart cover and the simulation card in manner 1 is authenticating each other's identity again by the smart cover and the simulation card.

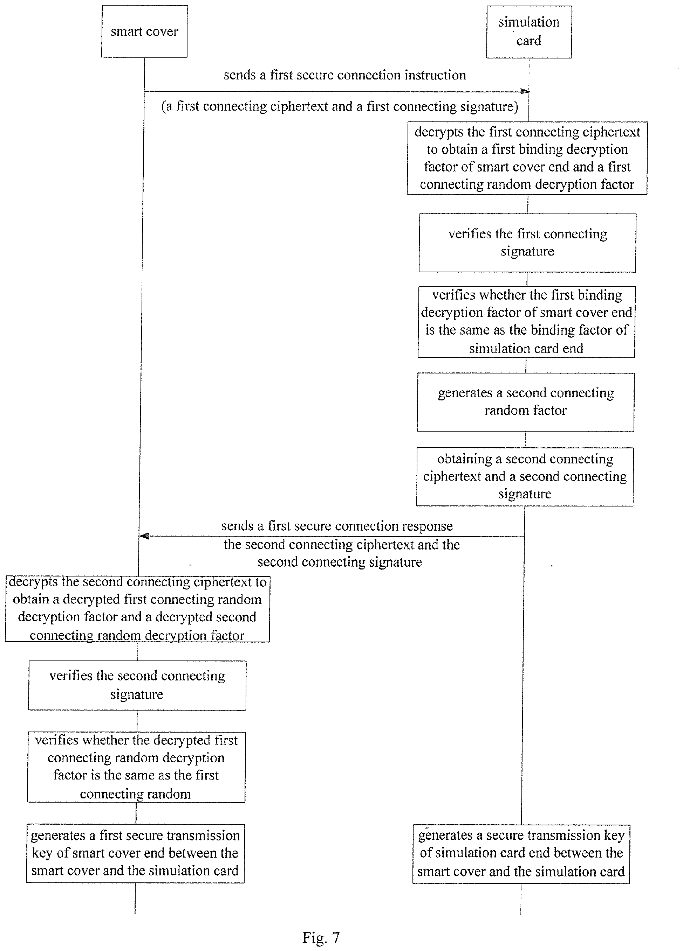

Fig. 7 is a flow chart of a first manner for establishing a secure connection between a smart cover and a simulation card according to an embodiment of the present disclosure. It should be understood that, this first manner for establishing the secure connection may be realized via the data interaction method or the data interaction system.

As illustrated in Fig. 7, establishing a secure connection between a smart cover and a simulation card may includes following actions. The smart cover sends a first secure connection instruction to the simulation card. The first secure connection instruction includes a first connecting ciphertext and a first connecting signature. The simulation card decrypts the first connecting ciphertext to obtain a first binding decryption factor of smart cover end and a first connecting random decryption factor. The simulation card verifies the first connecting signature. The simulation card verifies whether the first binding decryption factor of smart cover end is the same as the binding factor of simulation card end. The simulation card generates a second connecting random factor. The simulation card obtains a second connecting ciphertext and a second connecting signature. The simulation card sends a first secure connection response to the smart card. The first secure connection response includes the second connecting ciphertext and the second connecting signature. The simulation card generates a secure transmission key of simulation card end between the smart cover and the simulation card. The smart card decrypts the second connecting ciphertext to obtain a decrypted first connecting random decryption factor and a decrypted second connecting random decryption factor. The smart card verifies the second connecting signature. The smart card verifies whether the decrypted first connecting random decryption factor is the same as the first connecting random. The smart card generates a first secure transmission key of smart cover end between the smart cover and the simulation card.

It can be seen that, based on the above secure connection between the smart cover and the simulation card, security of data transmission can be improved. Moreover, it can be further verified whether the smart cover is bound with the simulation card, thus further improving the security.

In addition, the present disclosure is not limited to the secure connection establishment initiated by the smart cover, and the simulation card may also be triggered by the smart cover to initiate the secure connection establishment. In this case, a first secure connection instruction is sent to the smart cover by the simulation card, and other processes can be realized by opposite implementation subjects to the above description, which is no longer elaborated herein.

In manner 2, the smart cover and the simulation card authenticate each other's identity (for example, authenticate each other's signature data). Secure transmission key factors are generated in the process of authenticating each other's identity. After authenticating each other's identity, secure transmission keys (the first secure transmission key of smart cover end and the secure transmission key of simulation card end) for secure data transmission between the smart cover and the simulation card are generated by using at least stored binding factors and the secure transmission key factors, and whether the secure transmission keys generated by the smart cover and the simulation card respectively are the same is verified.

It should be noted that, if the smart cover and the simulation card authenticate each other's certificate and identity before the secure connection between the smart cover and the simulation card is established, and a binding operation that the smart cover and the simulation card store binding factors generated in authenticating process respectively after the mutual authentication is successful, authenticating each other's identity by the smart cover and the simulation card in manner 2 is authenticating each other's identity again by the smart cover and the simulation card.

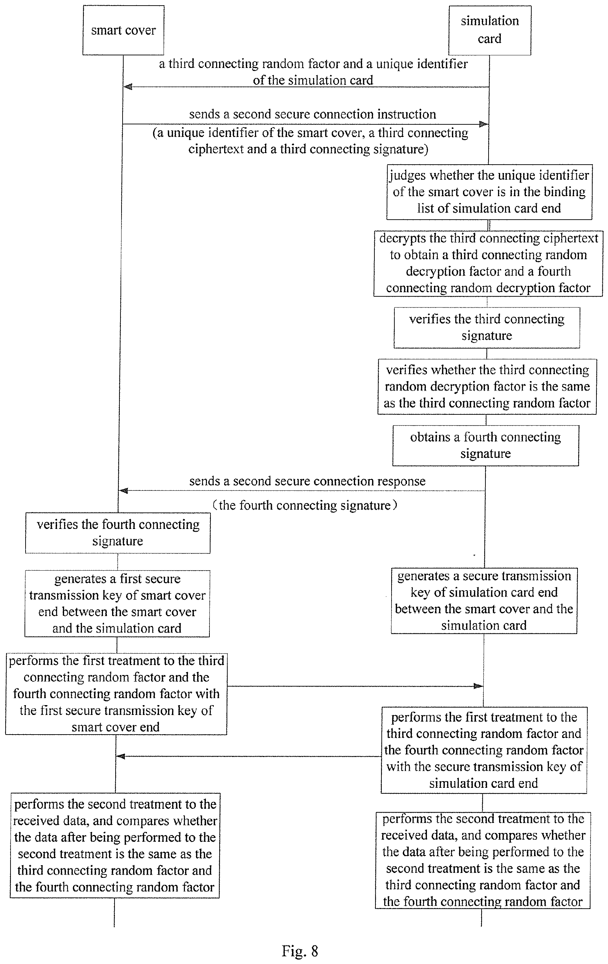

Fig. 8 is a flow chart of a second manner for establishing a secure connection between a smart cover and a simulation card according to an embodiment of the present disclosure. It should be understood that, this second manner for establishing the secure connection may be realized via the data interaction method or the data interaction system.

As illustrated in Fig. 8, establishing a secure connection between a smart cover and a simulation card may include following actions. The simulation card sends a third connecting random factor and a unique identifier of the simulation card to the smart cover. The smart cover sends a second secure connection instruction to the simulation card. The second secure connection instruction includes a unique identifier of the smart cover, a third connecting ciphertext and a third connecting signature. The simulation card judges whether the unique identifier of the smart cover is in the binding list of simulation card end. The simulation card decrypts the third connecting ciphertext to obtain a third connecting random decryption factor and a fourth connecting random decryption factor. The simulation card verifies the third connecting signature. The simulation card verifies whether the third connecting random decryption factor is the same as the third connecting random factor. The simulation card obtains a fourth connecting signature. The simulation card sends a second secure connection response to the smart cover. The second secure connection response includes the fourth connecting signature. The simulation card generates a secure transmission key of simulation card end between the smart cover and the simulation card. The smart cover verifies the fourth connecting signature. The smart cover generates a first secure transmission key of smart cover end between the smart cover and the simulation card. The smart cover performs the first treatment to the third connecting random factor and the fourth connecting random factor with the first secure transmission key of smart cover end. The simulation card performs the first treatment to the third connecting random factor and the fourth connecting random factor with the secure transmission key of simulation card end. The simulation card performs the second treatment to the received data, and compares whether the data after being performed to the second treatment is the same as the third connecting random factor and the fourth connecting random factor. The smart cover performs the second treatment to the received data, and compares whether the data after being performed to the second treatment is the same as the third connecting random factor and the fourth connecting random factor.

In addition, the present disclosure is not limited to the secure connection establishment initiated by the smart cover, and the simulation card may also be triggered by the smart cover to initiate the secure connection establishment. In this case, a second secure connection instruction is sent to the smart cover by the simulation card, and other processes can be realized by opposite implementation subjects to the above description, which is no longer described herein.

Certainly, in the process of generating the secure transmission keys for secure data transmission between the smart cover and the simulation card in above manner 1 and manner 2, the binding factors used are generated and stored by the smart cover and the simulation card in a binding process. The binding factors may be generated and stored in the authenticating process after the smart cover and the simulation card authenticate each other's certificate and identity and the mutual authentication is successful. Or, the binding factors may be input manually and stored.

In addition, if there is no binding operation executed between the smart cover and the simulation card, the binding factors used in above manner 1 and manner 2 may be random values manually input in the process of establishing the secure connection. Or, in the process of establishing the secure connection, the secure transmission keys are generated according to only random factors, not verifying the secure transmission keys or not using the binding factors for generating the secure transmission keys.

2. A secure connection between the smart cover and the real card manager is established, and a second secure transmission key of smart cover end and a secure transmission key of real card manager end for secure data transmission between the smart cover and the real card manager are obtained.

In the present disclosure, the secure connection between the smart cover and the real card manager may be established by following manners.

In manner 1, the smart cover and the real card manager authenticate each other's identity. In the process of authenticating each other's identity, it is compared whether binding factors stored in the two parties are the same. After it is determined that the binding factors stored in the two parties are the same and the mutual authentication is successful, secure transmission keys (the second secure transmission key of smart cover end and the secure transmission key of real card manager end) for secure data transmission between the smart cover and real card manager are generated.

It should be noted that, if a binding operation that the smart cover and the real card manager authenticate each other's certificate and identity and store binding factors generated in authenticating process respectively after the mutual authentication is successful, is executed before the secure connection between the smart cover and the real card manager is established, authenticating each other's identity by the smart cover and the real card manager in manner 1 is authenticating each other's identity again by the smart cover and the real card manager.

Differences between a solution that the smart cover and the real card manager establish the secure connection through manner 1 and a solution that the smart cover and the simulation card establish the secure connection through manner 1 are as follows.

Firstly, execution subjects are different. In the solution that the smart cover and the real card manager establish the secure connection through manner 1, the execution subjects are the smart cover and the real card manager. In the solution that the smart cover and the simulation card establish the secure connection through manner 1, the execution subjects are the smart cover and the simulation card. Operations that the smart cover executes are the same in the two solutions, and operations that the real card manager executes are the same as that of the simulation card.

Secondly, ways for generating secure connection instructions are different. In the solution that the smart cover and the real card manager establish the secure connection through manner 1, a third secure connection instruction may be generated by a physical connection button individually provided on the smart cover, or be generated by a virtual connection button on the touch screen of the smart cover, or be generated after a power-on password is verified to be correct, or be generated when the smart cover sends a login request to the real card manager, or be generated by selecting a connecting function from a menu displayed on the screen of the smart cover.

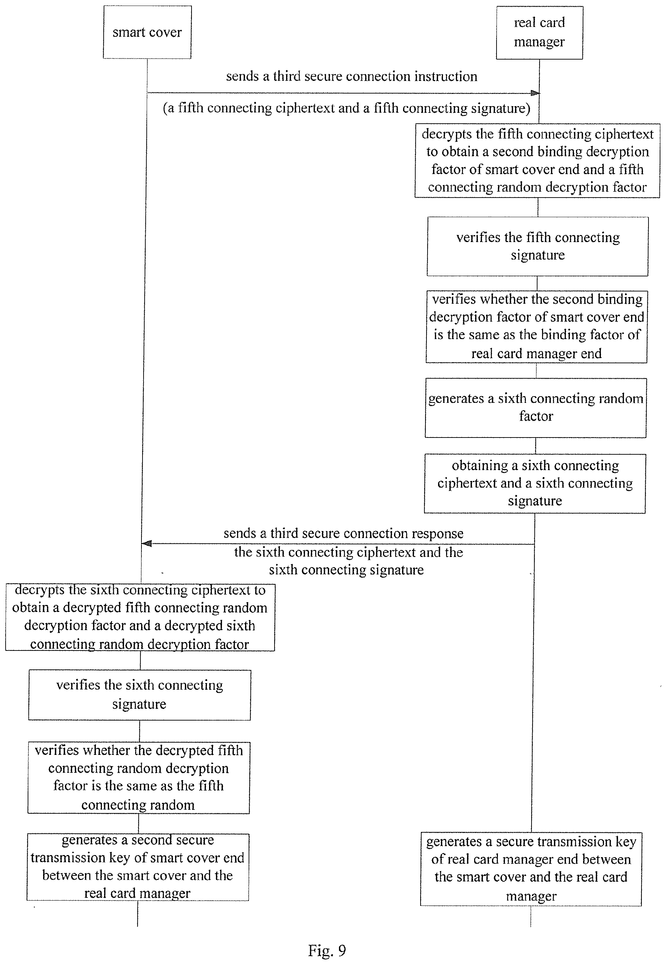

Fig. 9 is a flow chart of a first manner for establishing a secure connection between a smart cover and a real card manager according to an embodiment of the present disclosure. It should be understood that, this first manner for establishing the secure connection may be realized via the data interaction method or the data interaction system.

As illustrated in Fig. 9, establishing a secure connection between a smart cover and a real card manager may include following actions. The smart cover sends a third secure connection instruction to the real card manager. The third secure connection instruction includes a fifth connecting ciphertext and a fifth connecting signature. The real card manager decrypts the fifth connecting ciphertext to obtain a second binding decryption factor of smart cover end and a fifth connecting random decryption factor. The real card manager verifies the fifth connecting signature. The real card manager verifies whether the second binding decryption factor of smart cover end is the same as the binding factor of real card manager end. The real card manager generates a sixth connecting random factor. The real card manager obtains a sixth connecting ciphertext and a sixth connecting signature. The real card manager sends a third secure connection response to the smart cover. The third secure connection includes the sixth connecting ciphertext and the sixth connecting signature. The real card manager generates a secure transmission key of real card manager end between the smart cover and the real card manager. The smart cover decrypts the sixth connecting ciphertext to obtain a decrypted fifth connecting random decryption factor and a decrypted sixth connecting random decryption factor. The smart cover verifies the sixth connecting signature. The smart cover verifies whether the decrypted fifth connecting random decryption factor is the same as the fifth connecting random. The smart cover generates a second secure transmission key of smart cover end between the smart cover and the real card manager.

In addition, the present disclosure is not limited to the secure connection establishment initiated by the smart cover, and the real card manager may also be triggered by the smart cover to initiate the secure connection establishment. In this case, the third secure connection instruction is sent to the smart cover by the real card manager, and other processes can be realized by opposite implementation subjects to the above description, which is no longer described herein.

In manner 2, the smart cover and real card manager authenticate each other's identity. Secure transmission key factors are generated in the process of authenticating each other's identity. After authenticating each other's identity, secure transmission keys (the second secure transmission key of smart cover end and the secure transmission key of real card manager end) for secure data transmission between the smart cover and the real card manager are generated by using at least stored binding factors and the secure transmission key factors, and it is verified whether the secure transmission keys generated by the smart cover and the real card manager are the same.

It should be noted that, if a binding operation that, the smart cover and the real card manager authenticate each other's certificate and identity store binding factors generated in authenticating process respectively after the mutual authentication is successful, is executed before the secure connection between the smart cover and the real card manager is established, authenticating each other's identity by the smart cover and the real card manager in manner 2 is authenticating each other's identity again by the smart cover and the real card manager.

Differences between a solution that the smart cover and the real card manager establish the secure connection through manner 2 and a solution that the smart cover and the simulation card establish the secure connection through manner 2 are as follows.

Firstly, execution subjects are different. In the solution that the smart cover and the real card manager establish the secure connection through manner 2, the execution subjects are the smart cover and the real card manager. In the solution that the smart cover and the simulation card establish the secure connection through manner 2, the execution subjects are the smart cover and the simulation card. Operations that the smart cover executes are the same in the two solutions, and operations that the real card manager executes are the same as that of the simulation card.

Secondly, ways for generating secure connection instructions are different. In the solution that the smart cover and the real card manager establish the secure connection through manner 2, a fourth secure connection instruction may be generated by a physical connection button individually provided on the smart cover, or be generated by a virtual connection button on the touch screen of the smart cover, or be generated after that a power-on password is verified to be correct, or be generated when the smart cover sends a login request to the real card manager, or be generated by selecting a connecting function from a menu displayed on the screen of the smart cover.

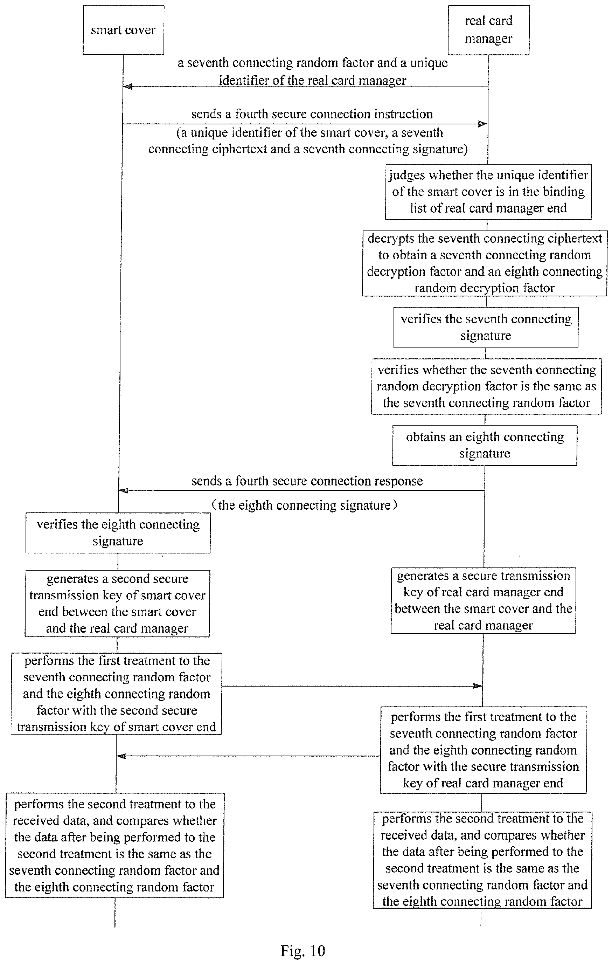

Fig. 10 is a flow chart of a second manner for establishing a secure connection between a smart cover and a real card manager according to an embodiment of the present disclosure. It should be understood that, this second manner for establishing the secure connection may be realized via the data interaction method or the data interaction system.

As illustrated in Fig. 10, establishing a secure connection between a smart cover and a real card manager may include following action. The real card manager sends a seventh connecting random factor and a unique identifier of the real card manager to the smart cover. The smart cover sends a fourth secure connection instruction to the real card manager. The fourth secure connection instruction includes a unique identifier of the smart cover, a seventh connecting ciphertext and a seventh connecting signature. The real card manager judges whether the unique identifier of the smart cover is in the binding list of real card manager end. The real card manager decrypts the seventh connecting ciphertext to obtain a seventh connecting random decryption factor and an eighth connecting random decryption factor. The real card manager verifies the seventh connecting signature. The real card manager verifies whether the seventh connecting random decryption factor is the same as the seventh connecting random factor. The real card manager obtains an eighth connecting signature. The real card manager sends a fourth secure connection response to the smart cover. The fourth secure connection response includes the eighth connecting signature. The real card manager generates a secure transmission key of real card manager end between the smart cover and the real card manager. The real card manager generates a secure transmission key of real card manager end between the smart cover and the real card manager. The smart cover verifies the eighth connecting signature. The smart cover generates a second secure transmission key of smart cover end between the smart cover and the real card manager. The smart cover performs the first treatment to the seventh connecting random factor and the eighth connecting random factor with the second secure transmission key of smart cover end. The real card manager performs the first treatment to the seventh connecting random factor and the eighth connecting random factor with the secure transmission key of real card manager end. The smart cover performs the second treatment to the received data, and compares whether the data after being performed to the second treatment is the same as the seventh connecting random factor and the eighth connecting random factor. The real card manager performs the second treatment to the received data, and compares whether the data after being performed to the second treatment is the same as the seventh connecting random factor and the eighth connecting random factor.

In addition, the present disclosure is not limited to the secure connection establishment initiated by the smart cover, and the real card manager may also be triggered by the smart cover to initiate the secure connection establishment. In this case, a fourth secure connection instruction is sent to the smart cover by the real card manager, and other processes can be realized by opposite implementation subjects to the above description, which is no longer described herein.

Certainly, in the process of generating the secure transmission keys for secure data transmission between the smart cover and the real card manager in above manner 1 and manner 2, the binding factors used are generated and stored by the smart cover and the real card manager in a binding process. The binding factors may be generated and stored in the authenticating process after the smart cover and the real card manager authenticate the each other's certificate and identity and the mutual authentication is successful. Or, the binding factors may be input manually and stored.

In addition, if there is no binding operation executed between the smart cover and the real card manager, the binding factors used in above manner 1 and manner 2 may be random values manually input in the process of establishing the secure connection. Or, in the process of establishing the secure connection, the secure transmission keys are generated according to only random factors, not verifying the secure transmission keys or not using the binding factors for generating the secure transmission keys.

In addition, in the present disclosure, before the secure connection between the smart cover and the real card manager is established, and the second secure transmission key of smart cover end and the secure transmission key of real card manager end for secure data transmission between the smart cover and the real card manager are obtained, the smart cover sends a login request to the real card manager. Specifically, the login request may be generated by a physical login button individually provided on the smart cover, or be generated by a virtual login button on the touch screen of the smart cover, or be generated after a power-on password is verified to be correct, or be generated by selecting a login function from a menu displayed on the screen of the smart cover. The login request may include a unique identifier of the smart cover, such that the real card manager knows which smart cover requests to login.

After the smart cover sends the login request to the real card manager, the secure connection between the smart cover and the real card manager is established, and the second secure transmission key of smart cover end and the secure transmission key of real card manager end for secured data transmission between the smart cover and the real card manager are obtained, following operations are executed.

The smart cover performs a first processing to a received login password with the second secure transmission key of smart cover end, and sends the first processed login password to the real card manager. Specifically, the smart cover may further prompt the user of inputting the login password. After the user inputs a login password, the smart cover performs the first processing to the login password with the second secure transmission key of smart cover end, and sends the first processed login password to the real card manager, thus improving security of login password transmission.

The real card manager receives the data sent by the smart cover, performs a second processing to the received data with the secure transmission key of real card manager end, and verifies accuracy of the second processed data. Specifically, after performing the second processing to the data sent by the smart cover with the secure transmission key of real card manager end, the real card manager obtains the login password input by the user, and compares the login password with a stored legal login password. Only if the login password input by the user is the same as the stored legal login password, the smart cover is allowed to log in the real card manager, thus improving login security, and ensuring security of subsequent data transmission. If the real card manager according to the present disclosure has an alarming function, a legal login password and an alarm password may be preset in the real card manager. In this case, the real card manager obtains a password to be verified after performing the second processing to the received data with the secure transmission key of real card manager end. The real card manager judges whether the password to be verified is the alarm password. If the password to be verified is the alarm password, the real card manager determines that the password to be verified passes verification, and performs an alarming operation. If the password to be verified is not the alarm password and is the login password, the real card manager determines that the password to be verified passes the verification. Since the alarm password is set, the real card manger can recognize that there is a security risk in current login, and performs the alarming operation (for example, the real card manger sends an alarming message, or dials an alarming call to law enforcement, or the like) when the login password input by the user is the alarm password.

After the real card manager verifies that the second processed data passes the verification, the smart cover logs in the real card manager.

It can be seen that, before the secure connection between the smart cover and the real card manager is established, the smart cover sends the login request, and the secure connection establishment is triggered while the smart cover sends the login request. After the secure connection is established, the login password is verified, thus saving process and improving processing speed.

In addition, in order to ensure effectiveness of the real card information list of smart cover end, the real card information list of smart cover end may be updated by following manners after the secure connection between the smart cover and the real card manger is established and the smart cover logs in the real card manager,.

In manner 1, after the smart cover logs in the real card manager, the real card manager judges whether it is required to perform operations for updating the real card information list of smart cover end.

Referring to previous description, manner 1 is different from the previous description in that: after establishing the secure connection, when sending data, the smart cover and the real card manager perform the first processing to the data to be sent with transmission keys. Accordingly, when receiving the data, the smart cover and the real card manager may first perform the second processing to the received data with the transmission keys, and then perform subsequent processing. It is no longer described herein.

In manner 2, after the smart cover logs in the real card manager, the smart cover judges whether it is required to perform operations for updating the real card information list of smart cover end.

Referring to previous description, what is different from the previous description is that: after establishing the secure connection, when sending data, the smart cover and the real card manager perform the first processing to the data to be sent with transmission keys. Accordingly, when receiving the data, the smart cover and the real card manager may first perform the second processing to the received data with the transmission keys, and then perform subsequent processing. It is no longer described herein.

The smart cover according to the present disclosure further includes a heartbeat sleep mode in addition to a normal operation mode. The heartbeat sleep mode is a non-operating mode with low power consumption, that is, some unnecessary power consumption programs are closed. Specifically, the smart cover may enter the heartbeat sleep mode if there is no operation within a preset period of time, or be controlled to enter the heartbeat sleep mode according to operation of the user.

In the heartbeat sleep mode, the smart cover may further judge whether or not to maintain the secure connection established between the smart cover and the real card manager, so that when the smart cover recovers to the operation mode from the heartbeat sleep mode, the smart cover does not need to establish the secure connection with the real card manager again, thus improving convenience.

A specific implementation for the smart cover to judge whether or not to maintain the secure connection established between the smart cover and the real card manager in the heartbeat sleep mode is provided in the following.

In the heartbeat sleep mode, the smart cover sends a detecting message to the real card manager every a first preset time.

The real card manager receives the detecting message, and sends a response message to the smart cover.

If the smart cover does not receive the response message in a second preset time, the smart cover breaks the secure connection between the smart cover and the real card manager.

If the smart cover receives the response message in a second preset time, the smart cover maintains the established secure connection between the smart cover and the real card manager.

If the smart cover does not receive the response message in the second preset time, network between the smart cover and the real card manager may be unstable, or the real card manger may work abnormally, and thus, in this case, by breaking the secure connection between the smart cover and the real card manager, security may be ensured. If the smart cover receives the response message in the second preset time, the smart cover maintains the secure connection between the smart cover and the real card manager, such that the smart cover does not need to establish the secure connection again when the smart cover recovers to the operation mode, thus making it convenient to use.

Certainly, in the heartbeat sleep mode, the user can also choose to manually break the secure connection between the smart cover and the real card manager, for example, by an operation that makes the smart cover log out of the real card manager, or a shutdown operation performed by the user to the smart cover.

The first preset time may be the same as or different from the second preset time.

Manners for updating the real card information list of smart cover end in the heartbeat sleep mode are provided in the following.

In manner 3, after the smart cover logs in the real card manager, the smart cover is in the heartbeat sleep mode, and the smart cover judges whether there is a need to perform operations for updating the real card information list of smart cover end.

In the heartbeat sleep mode, that the smart cover judges whether there is a need to perform operations for updating the real card information list of smart cover end may refer to previous description, what is different from the previous description is that: after establishing the secure connection, when sending data, the smart cover and the real card manager perform the first processing to the data to be sent with transmission keys. Accordingly, when receiving the data, the smart cover and the real card manager may first perform the second processing to the received data with the transmission keys, and then perform subsequent processing. It is no longer described herein.

In manner 4, after the smart cover logs in the real card manager, the smart cover is in the heartbeat sleep mode, and the real card manager judges whether it is necessary to perform operations for updating the real card information list of smart cover end.

In the heartbeat sleep mode, that the real card manager judges whether it is necessary to perform operations for updating the real card information list of smart cover end may refer to previous description, what is different from the previous description is that: after establishing the secure connection, when sending data, the smart cover and the real card manager perform the first processing to the data to be sent with transmission keys. Accordingly, when receiving the data, the smart cover and the real card manager may first perform the second processing to the received data with the transmission keys, and then perform subsequent processing. It is no longer described herein.

### VI. binding

In order to further improve the security of data interaction, before establishing the secure connection between the smart cover and the simulation card, a process of performing a binding operation to the smart cover and the simulation card may further be included.

Before establishing the secure connection between the smart cover and the real card manager, the process of performing a binding operation to the smart cover and the real card manager may further be included.

Certainly, the above two processes may be executed at the same time, or may be executed at different times. Only one of the above two processes may be executed, or both of the above two processes may be executed.

1. The smart cover and the simulation card perform the binding operation.

In the present disclosure, the smart cover and the simulation card may be bound by following manners.

The smart cover and the simulation card authenticate each other's certificate and identity, and store the binding factors generated in authenticating process after the mutual authentication is successful.

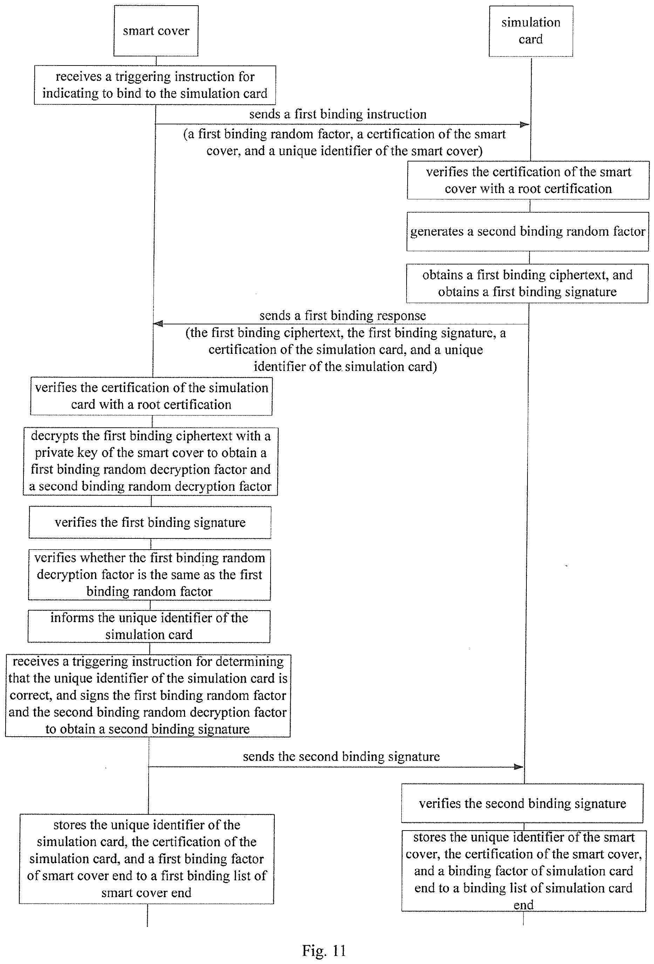

Fig. 11 is a flow chart of performing a binding operation between a smart cover and a simulation card according to an embodiment of the present disclosure. It should be understood that, the binding operation may be realized via the data interaction method or the data interaction system.

As illustrated in Fig. 11, performing a binding operation between a smart cover and a simulation card may include following actions. The smart cover receives a triggering instruction for indicating to bind to the simulation card. The smart cover sends a first binding instruction to the simulation card. The first binding instruction includes a first binding random factor, a certification of the smart cover, and a unique identifier of the smart cover. The simulation card verifies the certification of the smart cover with a root certification. The simulation card generates a second binding random factor. The simulation card obtains a first binding ciphertext, and obtains a first binding signature. The simulation card sends a first binding response to the smart cover. The first binding response includes the first binding ciphertext, the first binding signature, a certification of the simulation card, and a unique identifier of the simulation card. The smart cover verifies the certification of the simulation card with a root certification. The smart cover decrypts the first binding ciphertext with a private key of the smart cover to obtain a first binding random decryption factor and a second binding random decryption factor. The smart cover verifies the first binding signature. The smart cover verifies whether the first binding random decryption factor is the same as the first binding random factor. The smart cover informs the unique identifier of the simulation card. The smart cover receives a triggering instruction for determining that the unique identifier of the simulation card is correct, and signs the first binding random factor and the second binding random decryption factor to obtain a second binding signature. The smart cover sends the second binding signature to the simulation card. The smart cover stores the unique identifier of the simulation card, the certification of the simulation card, and a first binding factor of smart cover end to a first binding list of smart cover end. The simulation card verifies the second binding signature. The simulation card stores the unique identifier of the smart cover, the certification of the smart cover, and a binding factor of simulation card end to a binding list of simulation card end.

It can be seen that, based on the above operation for binding the smart cover and the simulation card, the security of subsequent data interaction between the smart cover and the simulation card can be ensured.

In addition, the above operation for binding the smart cover and the simulation card is not necessary. It is possible to select performing or not performing the above operation for binding the smart cover and the simulation card according to needs of different application scenarios.

Certainly, the operation for binding the smart cover and the simulation card is not limited to the above implementation. For example, manual binding can also be used. That is, in a credible environment, an identification of a simulation card to be bound is input on the smart cover as a first binding factor of smart cover end, and the identification of the simulation card is taken as a default binding factor of simulation card end by the simulation card. Or, a contact connection is performed between the smart cover and the simulation card, and a random value is input on the smart cover as the first binding factor of smart cover end, and the input random value is sent by the smart cover to the simulation card through the contact connection, as the binding factor of simulation card end. Any other implementation that can make the smart cover and the simulation card obtain the same binding factors should belong to the scope of the present disclosure.

2. The smart cover and the real card manager performs binding operation.

In the present disclosure, the smart cover and the real card manager may be bound by following manners.

The smart cover and the real card manager authenticate each other's certificate and identity, and store binding factors generated in authenticating process after the mutual authentication is successful.

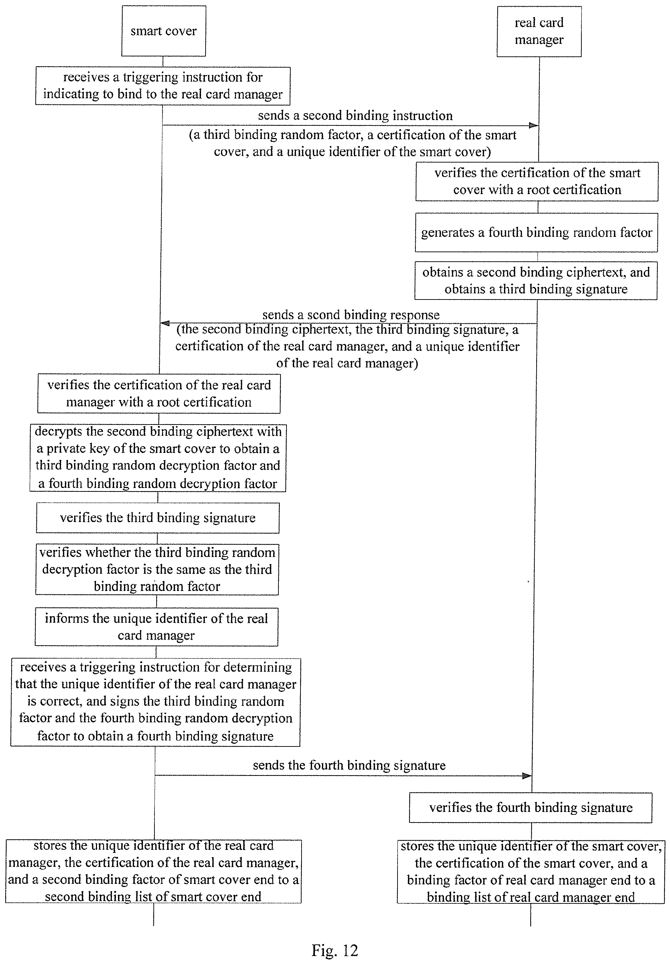

Fig. 12 is a flow chart of performing a binding operation by a smart cover and a real card manager according to an embodiment of the present disclosure. It should be understood that, the binding operation may be realized via the data interaction method or the data interaction system.

As illustrated in Fig. 12, performing a binding operation by a smart cover and a real card manager may include following actions. The smart cover receives a triggering instruction for indicating to bind to the real card manager. The smart cover sends a second binding instruction to the real card manager. The second binding instruction includes a third binding random factor, a certification of the smart cover, and a unique identifier of the smart cover. The real card manager verifies the certification of the smart cover with a root certification. The real card manager generates a fourth binding random factor. The real card manager obtains a second binding ciphertext, and obtains a third binding signature. The real card manager sends a second binding response the smart cover. The second binding response includes the second binding ciphertext, the third binding signature, a certification of the real card manager, and a unique identifier of the real card manager. The smart cover verifies the certification of the real card manager with a root certification. The smart cover decrypts the second binding ciphertext with a private key of the smart cover to obtain a third binding random decryption factor and a fourth binding random decryption factor. The smart cover verifies the third binding signature. The smart cover verifies whether the third binding random decryption factor is the same as the third binding random factor. The smart cover informs the unique identifier of the real card manager. The smart cover receives a triggering instruction for determining that the unique identifier of the real card manager is correct, and signs the third binding random factor and the fourth binding random decryption factor to obtain a fourth binding signature. The smart cover sends the fourth binding signature to the real card manager. The smart cover stores the unique identifier of the real card manager, the certification of the real card manager, and a second binding factor of smart cover end to a second binding list of smart cover end. The real card manager verifies the fourth binding signature. The real card manager stores the unique identifier of the smart cover, the certification of the smart cover, and a binding factor of real card manager end to a binding list of real card manager end.

Certainly, it is not necessary to perform the above operation for binding the smart cover and the simulation card and the above operation for binding the smart cover and the real card manager at the same time. According to needs of different application scenarios, it is possible to select performing only the operation for binding the smart cover and the simulation card, or performing only the operation for binding the smart cover and the real card manager, or performing neither one.

### VII. data interaction.

After the secure connection is established between the smart cover and the simulation card, a first processing is performed on the first data sent by the simulation card to the smart cover using the secure transmission key of simulation card end, and then the first data after the first processing is sent to the smart cover. After receiving the first data obtained after the first processing, the smart cover performs a second processing using the first secure transmission key of smart cover end.

After the secure connection between the smart cover and the real card manager is established, the first data is sent by the smart cover to the real card manger after a first processing is performed on the first data using the second secure transmission key of smart cover end. After receiving the first data obtained after the first processing, the real card manager performs a second processing with the secure transmission key of real card manager end.

Thus, the security of data interaction is ensured.

In the following, a data interaction method after establishing a secure connection between the smart cover and the simulation card and establishing a secure connection between the smart cover and the real card manager of the present disclosure is provided, but the present disclosure is not limited thereto.

The simulation card receives data sent by the transaction terminal, and sends the data to the smart cover after performing the first processing on the received data with the secure transmission key of simulation card end. Specifically, in the data interaction process, the simulation card and the transaction terminal (such as an ATM machine, a POS machine, a recharge machine for bus cards) are connected (through the contact interface and/or the contactless interface). The simulation card receives the data sent by the transaction terminal, and the data may be data to be processed (such as withdrawal amount, charge amount, real card information obtaining request).

After the smart cover receives data sent by the simulation card, and performs the second processing on the received data with the first secure transmission key of smart cover end, and after the smart cover receives a confirming instruction for confirming that the data obtained after the second processing is correct, the smart cover uses the second secure transmission key of smart cover end to perform the first processing on the data obtained after the second processing and sends the data obtained after the first processing to the real card manager. Specifically, after receiving the data sent by the simulation card, and performing the second processing on the received data with the first secure transmission key of smart cover end, the smart cover may further display the data to be processed, or may play (for example, play by a loudspeaker, or play by an earphone) the data to be processed, so that the user can confirm whether the data to be processed is correct. Only when the data to be processed is correct, and the confirming instruction for confirming that the data to be processed is correct input by the user is received, the data to be processed is sent to the real card manager. If the user confirms that the data to be processed is incorrect, current data interaction may be directly cancelled. Thus, security of the data interaction is improved. The confirming instruction received by the smart cover for confirming that the data obtained after the second processing is correct may be generated by a physical confirming button individually provided on the smart cover, or may be generated by a virtual confirming button displayed on a touch screen of the smart cover, or may be generated by selecting a confirming function from a menu displayed on a screen of the smart cover, or may be generated after a voice collecting component (such as a microphone) of the smart cover receives and authenticates a voice confirming instruction, or may be generated after a fingerprint collecting component of the smart cover receives and authenticates a fingerprint confirming instruction, or may be generated after an iris collecting component of the smart cover receives and authenticates an iris confirming instruction. Certainly, the confirming instruction may be generated in any other ways, which is not limited in the present disclosure.

The real card manager receives data sent by the smart cover, and sends the data to the selected real card after performing the second processing on the received data with the secure transmission key of real card manager end. Specifically, the real card manager sends the data to be processed to the selected real card, such that the selected real card processes the data to be processed.

Based on the above the data interaction process, various functions of different types of real cards can be realized by one simulation card. The user can complete the data interaction by just carrying the simulation card and the smart cover, without carrying real cards, thus improving convenience and security.

The smart cover may prompt information that needs to be confirmed during the data interaction process, and therefore, the user can perform the data interaction after confirming the information that needs to be confirmed during the data interaction process, thus ensuring authenticity of data interaction, and improving security.

In the data transmission process, encryption and decryption operations and/or verification operations are performed during data interactions among the simulation card, the smart cover and the real card manager, thus ensuring security and integrity of data transmission.

In addition, since it is possible to select and use the real card that matches the transaction terminal, unnecessary costs (such as cross-bank withdrawal fees) incurred due to the fact that the user does not carry the real card matching the transaction terminal in the related art can be solved.

### VIII. recharging

With the data interaction architecture according to the present disclosure, recharging operations (such as recharging for bus cards, water cards and electric cards, etc.) may be realized. Thus, it is convenient for the user to realize recharging for different types of real cards just by carrying the simulation card and the smart cover, which is convenient to carry, thus avoiding property damage due to losing the real cards.

In the following, a specific flow for recharging is provided, but the present is not limited thereto.

The smart cover obtains the real card information list of smart cover end. The real card information list of smart cover end is a real card information list of real card manager end obtained from the real card manager. Alternatively, before this step, operations such as starting up the smart cover, logging into the real card manager by the smart cover may be executed, which is no longer described herein, and reference can made to above relative description of starting up the smart cover and logging into the real card manager by the smart cover. In this step, obtaining the real card information list of smart cover end by the smart cover may further include a step of updating the real card information list of smart cover end by the smart cover, which is no longer described herein, and reference can made to above relative description of updating the real card information list of smart cover end by the smart cover. After obtaining the real card information list of real card manager end from the real card manager, the smart cover stores the real card information list of real card manager end in a storage area as the real card information list of smart cover end. When it is necessary to prompt (such as display or voice play) the real card information list of smart cover end, the smart cover can obtain the real card information list of smart cover end in local, thus improving processing speed of the smart cover.

The smart cover prompts the real card information list of smart cover end. Specifically, the smart cover displays the real card information list of smart cover end by its own displaying device or by means of an external displaying device. Or, the smart cover plays (for example, plays by a loudspeaker, or plays by an earphone) the real card information list of smart cover end in form of voice by its own voice playing device or by means of an external playing device. In this way, the user selects the real card to be used for recharging according to the real card information list of smart cover end, which makes it convenient for the user's selection, thus improving the user experience.

The smart cover receives the real card selecting instruction and determines the selected real card. The simulation card receives data sent by a recharging terminal, and performs the first processing on the received data with the secure transmission key of simulation card end, and sends the data obtained after first processing to the smart cover. Specifically, the real card selecting instruction received by the smart cover may be generated by a physical selection button individually provided on the smart cover, or may be generated by a virtual selection button displayed on a touch screen of the smart cover, or may be generated by selecting a menu item representing a selection function from a menu displayed on a screen of the smart cover. The smart cover receives the real card selecting instruction and determines the selected real card. The smart cover realizes data transmission with the selected real card through the real card manager. In addition, in the recharging process, the simulation card and the recharging terminal (such as recharging machine) are connected (through the contact interface or the contactless interface). The simulation card receives the data sent by the recharging terminal, in which the data may be recharging data to be processed (such as recharging amount), such that the user can subsequently confirm whether the recharging data to be processed is correct. In addition, before receiving the recharging data to be processed sent by the recharging terminal, the simulation card may further receive a request for obtaining real card information of the selected real card sent by the recharging terminal. The smart cover receives data sent by the simulation card, and performs the second processing on the received data with the first secure transmission key of smart cover end, and then performs the first processing on the data obtained after the second processing with the second secure transmission key of smart cover end, and sends the data obtained after the first processing to the real card manager. The real card manager receives the data sent by the smart cover, and performs the second processing on the received data with the secure transmission key of real card manager end, and then sends the data obtained after the second processing to the selected real card. The selected real card receives the data sent by the real card manager, and then sends the obtained real card information to the real card manager. The real card manager receives the data sent by the selected real card, and performs the first processing on the received data with the secure transmission key of real card manager end, and then sends the data obtained after the first processing to the smart cover. The smart cover receives the data sent by the real card manager, and performs the second processing on the received data with the second secure transmission key of smart cover end, and then performs the first processing with the first secure transmission of smart cover end on the data obtained after the second processing, and sends the data obtained after the first processing to the simulation card. The simulation card receives the data sent by the smart cover, and performs the second processing on the received data with the secure transmission key of simulation card end, then sends the data obtained after the second processing to the recharging terminal. Thus the recharging terminal obtains the real card information of the selected real card, which is convenient to recharge the real card subsequently.

The smart cover receives the data sent from the simulation card, and performs the second processing on the received data with the first secure transmission key of smart cover end, and then prompts the data obtained after the second processing. After receiving the confirming instruction for confirming that the data obtained after the second processing is correct, the smart cover performs the first processing with the second secure transmission key of smart cover end on the data obtained after the second processing, and then sends the data obtained after the first processing to the real card manager. Specifically, the smart cover may display the recharging data to be processed, or voice play (for example, play by a loudspeaker, or play by an earphone) the recharging data to be processed, so that the user can confirm whether the recharging data to be processed is correct. Only when the recharging data to be processed is correct, and the confirming instruction input by the user for confirming that the recharging data to be processed is correct is received, the recharging data to be processed is sent to the real card manager. If the user confirms that the recharging data to be processed is incorrect, current recharging may be directly cancelled. Thus, security of recharging is improved. The confirming instruction received by the smart cover for confirming that the data obtained after the second processing is correct may be generated by a physical confirming button individually provided on the smart cover, or may be generated by a virtual confirming button displayed on a touch screen of the smart cover, or may be generated by selecting a confirming function from a menu displayed on a screen of the smart cover, or may be generated after a voice collecting component (such as a microphone) of the smart cover receives and authenticates a voice confirming instruction, or may be generated after a fingerprint collecting component of the smart cover receives and authenticates a fingerprint confirming instruction, or may be generated after an iris collecting component of the smart cover receives and authenticates an iris confirming instruction. Certainly, the confirming instruction may be generated in any other ways, which is not limited in the present disclosure.

The real card manager receives data sent by the smart cover, performs the second processing on the received data with the secure transmission key of real card manager end, and then sends the data obtained after the second processing to selected real card. Specifically, the real card manager sends the recharging data to be processed to the selected real card, such that the selected real card processes the recharging data to be processed (such as performing recharging operation).

Based on the above recharging process, various functions of different types of real cards can be realized by one simulation card. For recharging, the user can just carries the simulation card and the smart cover, without carrying real cards, thus improving convenience and security of recharging.

The smart cover may prompt information that needs to be confirmed during the recharging process, and therefore the user can perform recharging after confirming the information that needs to be confirmed during the recharging process, thus ensuring authenticity of recharging, and improving security.

In the data transmission process, encryption and decryption operations and/or verification operations are performed during data interactions among the simulation card, the smart cover and the real card manager, thus ensuring security and integrity of data transmission.

In addition, since it is possible to select and use the real card that matches the recharging terminal, unnecessary costs (such as cross-bank withdrawal fees) incurred due to the fact that the user does not carry the real card matching the recharging terminal in the related art can be solved.

### IX. transaction

With the data interaction architecture according to the present disclosure, transaction operations (such as withdrawing or transferring at an ATM, or charging on the POS machine) can also be realized. Thus, it is convenient for the user to realize transaction of different types of real cards just by carrying the simulation card and the smart cover, which is convenient for the user's carrying, thus avoiding property damage due to losing the real cards.

In the following, a specific flow for transaction is provided, but the present is not limited thereto.

The smart cover obtains the real card information list of smart cover end. The real card information list of smart cover end is a real card information list of real card manager end obtained from the real card manager. Alternatively, before this step, operations such as starting up the smart cover, logging into the real card manager by the smart cover may be executed, which is no longer described herein, and reference can be made to above relative description of starting up the smart cover and logging into the real card manager by the smart cover. In this step, obtaining the real card information list of smart cover end by the smart cover may further include a step of updating the real card information list of smart cover end by the smart cover, which is no longer described herein, and reference can be made to above relative description of updating the real card information list of smart cover end by the smart cover. After obtaining the real card information list of real card manager end from the real card manager, the smart cover stores the real card information list of real card manager end in a storage area thereof as the real card information list of smart cover end. When it is necessary to prompt (such as display or voice play) the real card information list of smart cover end, the smart cover can directly obtain the real card information list of smart cover end in local, thus improving processing speed of the smart cover.

The smart cover prompts the real card information list of smart cover end. Specifically, the smart cover displays the real card information list of smart cover end by its own displaying device or by means of an external displaying device. Or, the smart cover plays (for example, plays by a loudspeaker, or plays by an earphone) the real card information list of smart cover end in form of voice by its own voice playing device or by means of an external playing device. In this way, the user can select the real card to be used for the transaction according to the real card information list of smart cover end, which makes it convenient for the user's selection, thus improving the user experience.

The smart cover receives the real card selecting instruction and determines the selected real card. The simulation card receives data sent by a transaction terminal, and performs the first processing on the received data with the secure transmission key of simulation card end, and sends the data obtained after the first processing to the smart cover. Specifically, the real card selecting instruction received by the smart cover may be generated by a physical selection button individually provided on the smart cover, or may be generated by a virtual selection button displayed on a touch screen of the smart cover, or may be generated by selecting a menu item representing a selection function from a menu displayed on a screen of the smart cover. The smart cover receives the real card selecting instruction and determines the selected real card. The smart cover realizes data transmission with the selected real card through the real card manager. In addition, in the transaction process, the simulation card and the transaction terminal (such as an ATM machine or a POS machine) are connected (through the contact interface or the contactless interface). The simulation card receives the data sent by the transaction terminal, in which the data may be transaction data to be processed (such as withdrawal amount, charge amount), such that the user can subsequently confirm whether the transaction data to be processed is correct. In addition, before receiving the transaction data to be processed sent by the transaction terminal, the simulation card may further receive a request sent by the transaction terminal for obtaining real card information of the selected real card. The smart cover receives data sent by the simulation card, and performs the second processing on the received data with the first secure transmission key of smart cover end, and then performs the first processing with the second secure transmission key of smart cover end on the data obtained after the second processing, and sends the data obtained after the first processing to the real card manager. The real card manager receives the data sent by the smart cover, and performs the second processing on the received data with the secure transmission key of real card manager end, and then sends the data obtained after the second processing to the selected real card. The selected real card receives the data sent by the real card manager, and then sends the obtained real card information to the real card manager. The real card manager receives the data sent by the selected real card, and performs the first processing on the received data with the secure transmission key of real card manager end, and then sends the data obtained after the first processing to the smart cover. The smart cover receives the data sent by the real card manager, and performs the second processing on the received data with the second secure transmission key of smart cover end, and then performs the first processing with the first secure transmission of smart cover end on the data obtained after the second processing, and sends the data obtained after the first processing to the simulation card. The simulation card receives the data sent by the smart cover, and performs the second processing to the received data with the secure transmission key of simulation card end, and then sends the data obtained after the second processing to the transaction terminal. Thus, the transaction terminal obtains the real card information of the selected real card, which is convenient for subsequent transaction with respect to the real card.

The smart cover receives the data sent from the simulation card, and performs the second processing on the received data with the first secure transmission key of smart cover end, and then prompts the data obtained after the second processing. After receiving the confirming instruction for confirming that the data obtained after the second processing is correct, the smart cover performs the first processing with the second secure transmission key of smart cover end on the data obtained after the second processing, and then sends the data obtained after the first processing to the real card manager. Specifically, the smart cover may display the transaction data to be processed, or voice play (for example, play by a loudspeaker, or play by an earphone) the transaction data to be processed, so that the user can confirm whether the transaction data to be processed is correct. Only when the transaction data to be processed is correct, and the confirming instruction input by the user for confirming that the transaction data to be processed is correct is received, the transaction data to be processed is sent to the real card manager. If the user confirms that the transaction data to be processed is incorrect, current transaction may be directly cancelled. Thus, security of transaction is improved. The confirming instruction received by the smart cover for confirming that the data obtained after the second processing is correct may be generated by a physical confirming button individually provided on the smart cover, or may be generated by a virtual confirming button displayed on a touch screen of the smart cover, or may be generated by selecting a confirming function from a menu displayed on a screen of the smart cover, or may be generated after a voice collecting component (such as a microphone) of the smart cover receives and authenticates a voice confirming instruction, or may be generated after a fingerprint collecting component of the smart cover receives and authenticates a fingerprint confirming instruction, or may be generated after an iris collecting component of the smart cover receives and authenticates an iris confirming instruction. Certainly, the confirming instruction may be generated in any other ways, which is not limited in the present disclosure.

The real card manager receives data sent by the smart cover, performs the second processing on the received data with the secure transmission key of real card manager end, and then sends the data obtained after the second processing to selected real card. Specifically, the real card manager sends the transaction data to be processed to the selected real card, such that the selected real card processes the transaction data to be processed.

The selected real card receives the data sent by the real card manager, performs the transaction processing, and sends the data obtained after the transaction processing to the real card manage. Specifically, the selected real card performs transaction processing on the transaction data to be processed, in which the transaction processing is a conventional solution of transaction processing in the related art, which is no longer described herein.

The real card manager receives the data sent by the selected real card, and performs the first processing on the received data with the secure transmission key of real card manager end, and then sends the data obtained after the first processing to the smart cover.

The smart cover receives the data sent by the real card manager, and performs the second processing on the received data with the second secure transmission key of smart cover end, and then performs the first processing with the first secure transmission key of smart cover end on the data obtained after the second processing, and sends the data obtained after the first processing to the simulation card.

The simulation card receives the data sent by the smart cover, and performs the second processing on the received data with the secure transmission key of simulation card end, and then sends the data obtained after the second processing to the transaction terminal. Specifically, after receiving the data obtained after transaction processing performed by the selected real card, the transaction terminal can complete current transaction, such as withdrawing money, transferring, deducting money by charging, according to existing transaction flow.

Based on the above transaction process, various functions of different types of real cards can be realized by one simulation card. For transaction, the user can just carries the simulation card and the smart cover, without carrying real cards, thus improving convenience and security of transaction.

The smart cover may prompt information that needs to be confirmed during the transaction process, and therefore the user can perform transaction after confirming the information that needs to be confirmed during the transaction process, thus ensuring authenticity of transaction, and improving security.

In the data transmission process, encryption and decryption operations and/or verification operations are performed during data interactions among the simulation card, the smart cover and the real card manager, thus ensuring security and integrity of data transmission.

In addition, since it is possible to select real card that matches the transaction terminal for use, unnecessary costs (such as cross-bank withdrawal fees) incurred due to the fact that the user does not carry the real card matching the transaction terminal in the related art can be solved.

Certainly, the above specific embodiment just discloses a single data interaction from the transaction terminal to the real card and from the real card to the transaction terminal. In practical application, there may be multiple data interactions, interaction process of which is similar to the single data interaction. In the multiple data interactions, whether to prompt interactive data at the smart cover can be set according to whether it is necessary to confirm interactive data, thus ensuring authenticity of the interactive data.

### X. updating application

1. Updating the application of the smart cover.

In the present disclosure, the smart cover can update its own installed applications or install a new application, so as to extend various applications of the smart cover or to update existing applications of the smart cover.

A specific implementation for updating the application of the smart cover is provided in the present disclosure, but the present disclosure is not limited thereto.

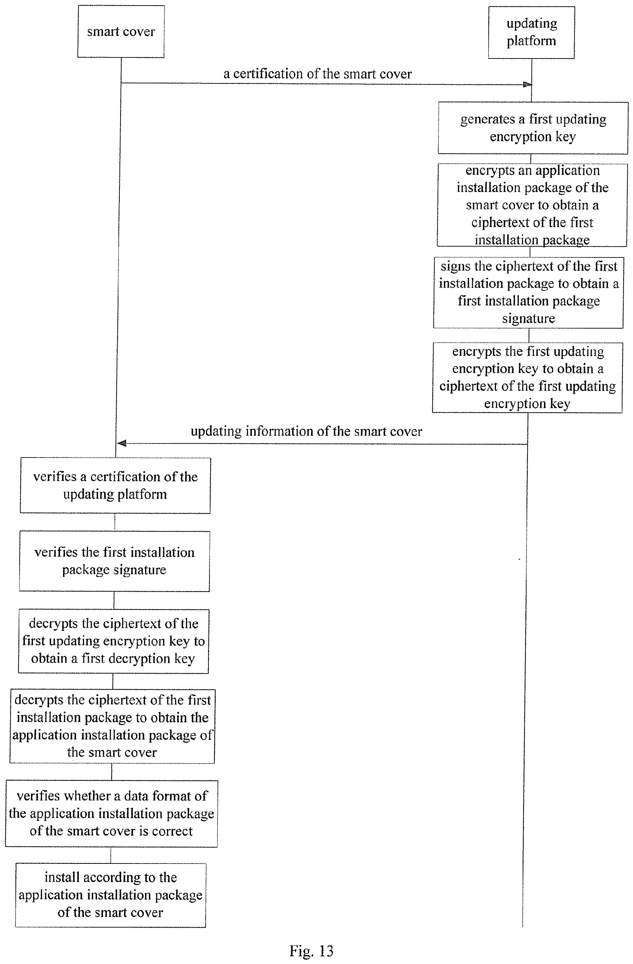

Fig. 13 is a flow chart of updating an application of a smart cover according to an embodiment of the present disclosure. It should be understood that, the updating process may be realized via the data interaction method or the data interaction system.

As illustrated in Fig. 13, updating an application of a smart cover may include following actions. The smart cover sends a certification of the smart cover to the updating platform. The updating platform generates a first updating encryption key. The updating platform encrypts an application installation package of the smart cover to obtain a ciphertext of the first installation package. The updating platform signs the ciphertext of the first installation package to obtain a first installation package signature. The updating platform encrypts the first updating encryption key to obtain a ciphertext of the first updating encryption key. The updating platform sends updating information of the smart cover to the smart cover. The smart cover verifies a certification of the updating platform. The smart cover verifies the first installation package signature. The smart cover decrypts the ciphertext of the first updating encryption key to obtain a first decryption key. The smart cover decrypts the ciphertext of the first installation package to obtain the application installation package of the smart cover. The smart cover verifies whether a data format of the application installation package of the smart cover is correct. The smart cover performs installation according to the application installation package of the smart cover.

Based on updating the application of the smart cover in the present disclosure, not only the installed application can be updated, but also the new application can be downloaded and installed, thus extending functions of the smart cover, and making it convenient for the user to use the smart cover.

2. Updating the application of the simulation card.

In the present disclosure, the simulation card can update installed applications of its own or install a new application, so as to extend various applications of the simulation card or to update existing applications of the simulation card.

A specific implementation for updating the application of the simulation card is provided in the present disclosure, but the present disclosure is not limited thereto.

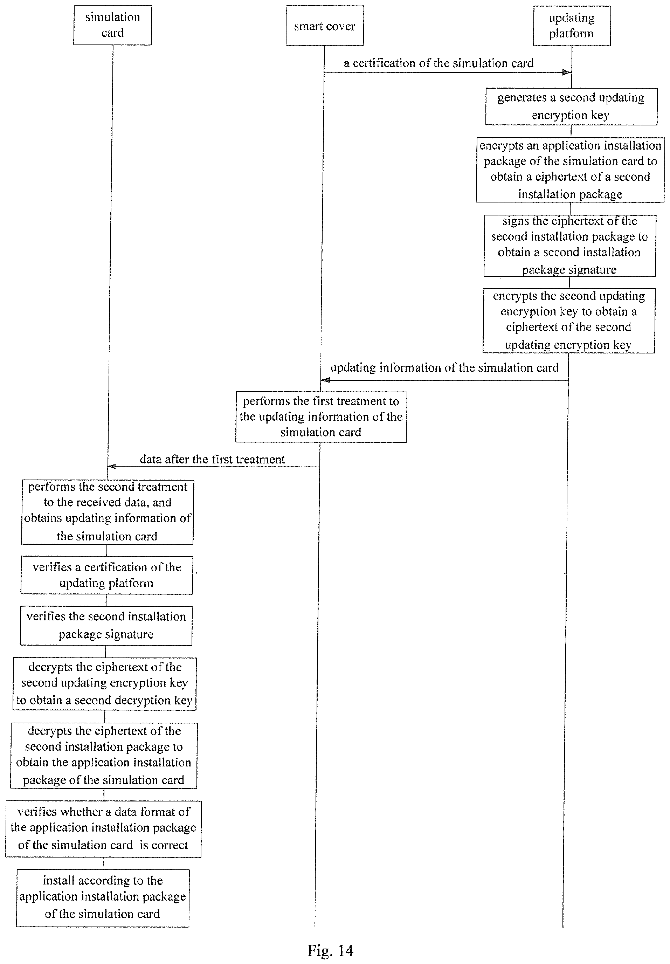

Fig. 14 is a flow chart of updating an application of a simulation card according to an embodiment of the present disclosure. It should be understood that, the updating process may be realized via the data interaction method or the data interaction system.

As illustrated in Fig. 14, updating an application of a simulation card may include following actions. The smart cover sends a certification of the simulation card to the updating platform. The updating platform generates a second updating encryption key. The updating platform encrypts an application installation package of the simulation card to obtain a ciphertext of a second installation package. The updating platform signs the ciphertext of the second installation package to obtain a second installation package signature. The updating platform encrypts the second updating encryption key to obtain a ciphertext of the second updating encryption key. The updating platform sends updating information of the simulation card to the smart cover. The smart cover performs the first treatment to the updating information of the simulation card, and send the data after the first treatment to the simulation card. The simulation card performs the second treatment to the received data, and obtains updating information of the simulation card. The simulation card verifies a certification of the updating platform. The simulation card verifies the second installation package signature. The simulation card decrypts the ciphertext of the second updating encryption key to obtain a second decryption key. The simulation card decrypts the ciphertext of the second installation package to obtain the application installation package of the simulation card. The simulation card verifies whether a data format of the application installation package of the simulation card is correct. The simulation card install according to the application installation package of the simulation card.

Based on updating the application of the simulation card in the present disclosure, not only the installed application can be updated, but also the new application can be downloaded and installed, thus extending functions of the simulation card, and making it convenient for the user to use the simulation card.

Certainly, if the secure connection between the smart cover and the simulation card is not established, the simulation card directly sends the data to the smart cover, and the smart cover directly sends the data to the simulation card, when the simulation card performs the application updating.

3. Updating the application of the real card manager.

In the present disclosure, the real card manager can update installed applications of its own or install a new application, so as to extend various applications of the real card manager or to update existing applications of the real card manager.

A specific implementation for updating the application of the real card manager is provided in the present disclosure, but the present disclosure is not limited thereto.

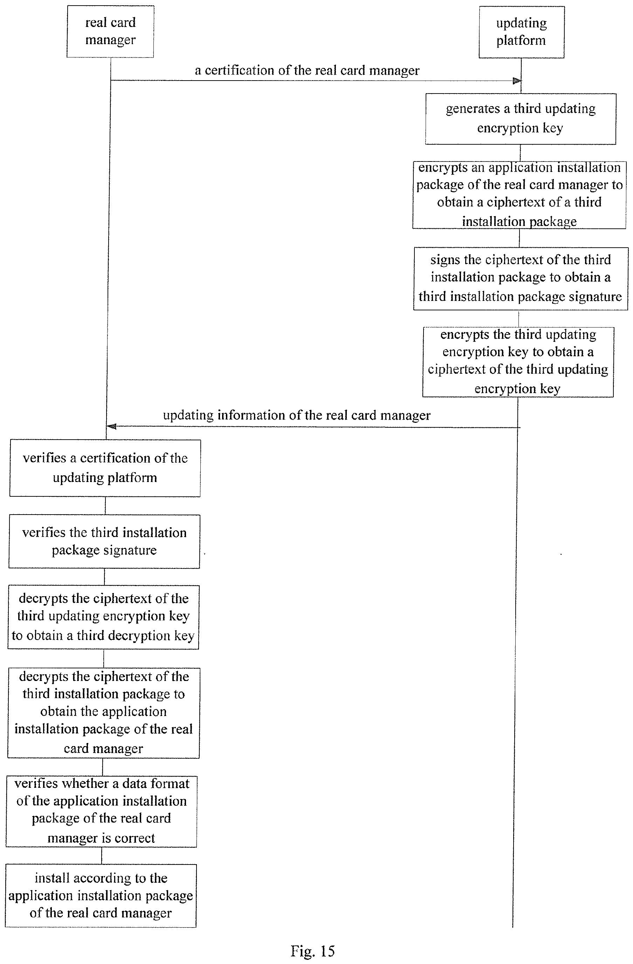

Fig. 15 is a flow chart of updating an application of a real card manager according to an embodiment of the present disclosure. It should be understood that, the updating process may be realized via the data interaction method or the data interaction system.

As illustrated in Fig. 15, updating an application of a real card manager may includes following actions. The real card manager sends a certification of the real card manager to the updating platform. The updating platform generates a third updating encryption key. The updating platform encrypts an application installation package of the real card manager to obtain a ciphertext of a third installation package. The updating platform signs the ciphertext of the third installation package to obtain a third installation package signature. The updating platform encrypts the third updating encryption key to obtain a ciphertext of the third updating encryption key. The updating platform sends updating information of the real card manager to the real card manager. The real card manager verifies a certification of the updating platform, and verifies the third installation package signature. The real card manager decrypts the ciphertext of the third updating encryption key to obtain a third decryption key, and decrypts the ciphertext of the third installation package to obtain the application installation package of the real card manager. The real card manager decrypts verifies whether a data format of the application installation package of the real card manager is correct. Installation is performed according to the application installation package of the real card manager.

Based on updating the application of the real card manager in the present disclosure, not only the installed application can be updated, but also the new application can be downloaded and installed, thus extending functions of the real card manager, and making it convenient for the user's usage.

In embodiments of the present disclosure, for all the normal data interaction process between the smart cover and the simulation card, the simulation card is in an effective communication range of the smart cover. If the smart cover detects that the simulation card is out of the effective communication range of the smart cover, the smart cover may prompt the user, or sends a prompt message to a user terminal (such as a smart phone, a tablet computer, etc.), so as to prompt the user of abnormal position of the simulation card, thus improving security for using the simulation card.

Any process or method described in a flow chart or described herein in other ways may be understood to include one or more modules, segments or portions of codes of executable instructions for achieving specific logical functions or steps in the process, and the scope of a preferred embodiment of the present disclosure includes other implementations, in which the order of execution is different from that which is depicted or discussed, including executing functions in a substantially simultaneous manner or in an opposite order according to the related functions. This should be understood by those skilled in the art to which embodiments of the present disclosure belong.

It should be understood that each part of the present disclosure may be realized by the hardware, software, firmware or their combination. In the above embodiments, multiple steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related hardware with programs. The programs may be stored in a computer readable storage medium, and the programs comprise one or a combination of the steps in the method embodiments of the present disclosure when run on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks, CD, etc.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. The appearances of the phrases throughout this specification are not necessarily referring to the same embodiment or example of the present disclosure. Furthermore, the particular features, structures, materials, or characteristics may be combined in any suitable manner in one or more embodiments or examples.

## Claims

1. A data interaction method, comprising:
obtaining a real card information list of smart cover end by a smart cover, wherein the real card information list of smart cover end is a real card information list of real card manager end obtained from a real card manager by the smart cover, and the real card information list of real card manager end comprises real card information of real cards connected to the real card manager;
prompting the real card information list of smart cover end by the smart cover;
receiving a real card selecting instruction by the smart cover, determining a selected real card by the smart cover;
receiving first data sent from a transaction terminal by a simulation card, and sending the first data to the smart cover by the simulation card;
prompting the first data by the smart cover, receiving a confirming instruction for confirming that the first data is correct by the smart cover, and sending the first data to the real card manager by the smart cover; and
receiving the first data sent from the smart cover by the real card manager, and sending the first data to the selected real card by the real card manager,
wherein, the method further comprises:
establishing a secure connection between the smart cover and the real card manager, and obtaining a second secure transmission key of smart cover end and a secure transmission key of real card manager end for secure data transmission between the smart cover and the real card manager,
wherein, before establishing a secure connection between the smart cover and the real card manager, the method further comprises:
sending a login request to the real card manager by the smart cover; and
after establishing a secure connection between the smart cover and the real card manager, further comprising:
performing a first processing on a received login password by the smart cover using the second secure transmission key of smart cover end to obtain a first processed password, and sending the first processed login password to the real card manager by the smart cover;
receiving data sent from the smart cover by the real card manager, performing a second processing on received data by the real card manager using the secure transmission key of real card manager end to obtain second processed data, and verifying a correctness of the second processed data by the real card manager;
after the real card manager verifies that the second processed data passes verification, making the smart cover login to the real card manager,
wherein performing a second processing on received data by the real card manager using the secure transmission key of real card manager end to obtain second processed data and verifying a correctness of the second processed data by the real card manager comprises:
performing the second processing on the received data by the real card manager using the secure transmission key of real card manager end to obtain a password to be verified;
determining, by the real card manger, whether the password to be verified is an alarm password;
if the password to be verified is an alarm password, performing an alarm operation by the real card manager after verified the password to be verified successful;
if the password to be verified is a login password rather than an alarm password, determining that the password to be verified passes the verification by the real card manager.

2. The method according to claim 1, further comprising:
establishing a secure connection between the smart cover and the simulation card, and
obtaining a first secure transmission key of smart cover end and a secure transmission key of simulation card end for secure data transmission between the smart cover and the simulation card.

3. The method according to claim 2, before establishing a secure connection between the smart cover and the simulation card, further comprising:
performing a binding operation between the smart cover and the simulation card.

4. The method according to claim 1, before establishing a secure connection between the smart cover and the real card manager, further comprising:
performing a binding operation between the smart cover and the real card manager.

5. The method according to claim 1, further comprising:
detecting, by the real card manager, the real cards connected to the real card manager;
after the real card manager detects the real cards connected to the real card manager, obtaining real card information of the real cards by the real card manager, wherein the real card information comprises at least a card number;
after the real card manager obtains the real card information of the real cards, generating the real card information list of real card manager end by the real card manager.

6. The method according to claim 5, further comprising:
generating an identification list of real card manager end by the real card manager, wherein
identifications in the identification list of real card manager end have a one-to-one correspondence with the real card information in the real card information list of real card manager end.

7. The method according to claim 1, wherein receiving a real card selecting instruction by the smart cover and determining a selected real card by the smart cover comprises:
receiving the real card selecting instruction by the smart cover, and obtaining a selected identification by the smart cover, wherein the selected identification is configured to indicate the selected real card;
sending the selected identification to the real card manager by the smart cover;
determining the selected real card corresponding to the selected identification by the real card manager from the real cards connected to the real card manager according to the selected identification.

8. The method according to any one of claims 1 to 7, wherein the real card manager sets ON and/or OFF for read and write access to the real card information of the real cards connected to the real card manager according to security levels of the real cards.

9. The method according to any one of claims 1 to 8, wherein the smart cover is a mobile device.

10. The method according to any one of claims 1 to 8, wherein the smart cover is a combination of a mobile device and an electronic signature token.

11. The method according to any one of claims 1 to 8, wherein the smart cover is an electronic signature token.

12. A data interaction system, comprising a simulation card, a smart cover and a real card manager, wherein,
the smart cover is configured to obtain a real card information list of smart cover end, to prompt the real card information list of smart cover end, to receive a real card selecting instruction, and to determine a selected real card, in which the real card information list of smart cover end is a real card information list of real card manager end obtained by the smart cover from the real card manager, and the real card information list of real card manager end comprises real card information of real cards connected to the real card manager;
the simulation card is configured to receive first data sent by a transaction terminal, and to send the first data to the smart cover;
the smart cover is further configured to prompt the first data, to receive a confirming instruction for confirming that the first data is correct, and to send the first data to the real card manager; and the real card manager is configured to receive the first data sent by the smart cover, and to send the first data to the selected real card;
the smart cover is further configured to establish a secure connection with the real card manager, and to obtain a second secure transmission key of smart cover end for secure data transmission between the smart cover and the real card manager;
the real card manager is further configured to establish a secure connection with the smart cover, and to obtain a secure transmission key of real card manager end for secure data transmission between the smart cover and the real card manager,
the smart cover is further configured, before the secure connection is established between the smart cover and the real card manager, to send a login request to the real card manager; and after the secure connection between the smart cover and the real card manager is established, to perform a first processing on a received login password using the second secure transmission key of smart cover end to obtain a first processed password, and send the first processed login password to the real card manager;
the real card manager is further configured to receive data sent from the smart cover, to perform a second processing on the received data using the secure transmission key of real card manager end to obtain second processed data, and to verify a correctness of the second processed data;
the smart cover is further configured, after the real card manager verifies that the second processed data passes verification, to login to the real card manager,
wherein the real card manager is configured to perform the second processing on the received data using the secure transmission key of real card manager end and to verify a correctness of the second processed data, by:
performing the second processing on the received data using the secure transmission key of real card manager end to obtain a password to be verified;
determining whether the password to be verified is an alarm password;
if the password to be verified is an alarm password, performing an alarm operation after verified the password to be verified successful;
if the password to be verified is a login password rather than an alarm password, determining that the password to be verified passes the verification.

## Patentansprüche

1. Dateninteraktionsverfahren, folgende Schritte umfassend:
Erhalten einer reale-Karten-Informationsliste von dem Smart-Cover-Ende durch ein Smart Cover, wobei die reale-Karten-Informationsliste von dem Smart-Cover-Ende eine reale-Karten-Informationsliste von dem reale-Karten-Manager-Ende ist, die das Smart Cover von dem reale-Karten-Manager erhalten hat, und wobei die reale-Karten-Informationsliste von dem reale-Karten-Manager-Ende reale-Karten-Informationen von mit dem reale-Karten-Manager verbundenen realen Karten aufweist;
Abrufen der reale-Karten-Informationsliste von dem Smart-Cover-Ende durch das Smart Cover;
Empfangen einer reale-Karten-Auswahlanweisung durch das Smart Cover, Bestimmen einer ausgewählten realen Karte durch das Smart Cover;
Empfangen von einem Transaktionsendgerät gesendeter erster Daten durch eine Simulationskarte und Senden der ersten Daten an das Smart Cover durch die Simulationskarte;
Abrufen der ersten Daten durch das Smart Cover, Empfangen einer Bestätigungsanweisung zum Bestätigen der Richtigkeit der ersten Daten durch das Smart Cover und Senden der ersten Daten an den reale-Karten-Manager durch das Smart Cover; und
Empfangen der von dem Smart Cover gesendeten ersten Daten durch den reale-Karten-Manager und Senden der ersten Daten an die ausgewählte reale Karte durch den reale-Karten-Manager,
wobei das Verfahren des Weiteren folgende Schritte umfasst:
Aufbauen einer sicheren Verbindung zwischen dem Smart Cover und dem reale-Karten-Manager und Erhalten eines zweiten sicheren Übertragungsschlüssels des Smart-Cover-Endes und eines sicheren Übertragungsschlüssels des reale-Karten-Manager-Endes zur sicheren Datenübertragung zwischen dem Smart Cover und dem reale-Karten-Manager,
wobei das Verfahren vor dem Aufbauen einer sicheren Verbindung zwischen dem Smart Cover und dem reale-Karten-Manager des Weiteren folgenden Schritt umfasst:
Senden einer Login-Anfrage an den reale-Karten-Manager durch das Smart Cover; und
nach dem Aufbauen einer sicheren Verbindung zwischen dem Smart Cover und dem reale-Karten-Manager des Weiteren folgende Schritte umfasst:
Durchführen einer ersten Verarbeitung eines empfangenen Login-Passwortes durch das Smart Cover unter Verwendung des zweiten sicheren Übertragungsschlüssels des Smart-Cover-Endes, um ein erstes verarbeitetes Passwort zu erhalten, und Senden des ersten verarbeiteten Login-Passwortes an den reale-Karten-Manager durch das Smart Cover;
Empfangen von von dem Smart Cover gesendeten Daten durch den reale-Karten-Manager, Durchführen einer zweiten Verarbeitung der empfangenen Daten durch den reale-Karten-Manager unter Verwendung des sicheren Übertragungsschlüssels des reale-Karten-Manager-Endes, um zweite verarbeitete Daten zu erhalten, und
Überprüfen der Richtigkeit der zweiten verarbeiteten Daten durch den reale-Karten-Manager;
nachdem der reale-Karten-Manager bestätigt hat, dass die zweiten verarbeiteten Daten die Überprüfung bestanden haben, Einloggen des Smart Covers in den reale-Karten-Manager,
wobei das Durchführen einer zweite Verarbeitung der empfangenen Daten durch den reale-Karten-Manager unter Verwendung des sicheren Übertragungsschlüssels des reale-Karten-Manager-Endes, um zweite verarbeitete Daten zu erhalten, und die Überprüfung der Richtigkeit der zweiten verarbeiteten Daten durch den reale-Karten-Manager folgende Schritte umfasst:
Durchführen der zweiten Verarbeitung der empfangenen Daten durch den reale-Karten-Manager unter Verwendung des sicheren Übertragungsschlüssels des reale-Karten-Manager-Endes, um ein zu überprüfendes Passwort zu erhalten;
Bestimmen durch den reale-Karten-Manager, ob das zu überprüfende Passwort ein Alarmpasswort ist;
wenn das zu überprüfende Passwort ein Alarmpasswort ist, Auslösen eines Alarms durch den reale-Karten-Manager, nachdem bestätigt wurde, dass das zu überprüfende Passwort erfolgreich war;
wenn das zu überprüfende Passwort ein Login-Passwort und kein Alarmpasswort ist, Bestimmen durch den reale-Karten-Manager, dass das zu überprüfende Passwort die Überprüfung besteht.

2. Verfahren nach Anspruch 1, des Weiteren folgende Schritte umfassend:
Aufbauen einer sicheren Verbindung zwischen dem Smart Cover und der Simulationskarte und Erhalten eines ersten sicheren Übertragungsschlüssels des Smart-Cover-Endes und eines sicheren Übertragungsschlüssels des Simulationskarten-Endes zum Sichern der Datenübertragung zwischen dem Smart Cover und der Simulationskarte.

3. Verfahren nach Anspruch 2, vor dem Aufbau einer sicheren Verbindung zwischen dem Smart Cover und der Simulationskarte, des Weiteren folgenden Schritt umfassend:
Durchführen eines Anbindungsvorgangs zwischen dem Smart Cover und der Simulationskarte.

4. Verfahren nach Anspruch 1, vor dem Aufbau einer sicheren Verbindung zwischen dem Smart Cover und dem reale-Karten-Manager, des Weiteren folgenden Schritt umfassend:
Durchführen eines Anbindungsvorgangs zwischen dem Smart Cover und dem reale-Karten-Manager.

5. Verfahren nach Anspruch 1, des Weiteren folgende Schritte umfassend:
Erkennen der mit dem reale-Karten-Manager verbundenen realen Karten durch den reale-Karten-Manager;
nachdem der reale-Karten-Manager die mit dem reale-Karten-Manager verbundenen realen Karten erkannt hat, Erhalten von reale-Karten-Informationen der realen Karten durch den reale-Karten-Manager, wobei die reale-Karten-Informationen zumindest eine Kartennummer umfassen;
nachdem der reale-Karten-Manager die reale-Karten-Informationen der realen Karten erhalten hat, Erzeugen der reale-Karten-Informationsliste des reale-Karten-Managers durch den reale-Karten-Manager.

6. Verfahren nach Anspruch 5, des Weiteren folgenden Schritt umfassend:
Erzeugen einer Identifizierungsliste von dem reale-Karten-Manager-Ende durch den reale-Karten-Manager, wobei die Identifizierungen in der Identifizierungsliste von dem reale-Karten-Manager-Ende eine eins-zu-eins Entsprechung mit den reale-Karten-Informationen in der reale-Karten-Informationsliste von dem reale-Karten-Manager-Ende aufweisen.

7. Verfahren nach Anspruch 1, wobei das Empfangen einer reale-Karten-Auswahlanweisung durch das Smart Cover und das Bestimmen einer ausgewählten realen Karte durch das Smart Cover folgende Schritte umfasst:
Empfangen der reale-Karten-Auswahlanweisung durch das Smart Cover und Erhalten einer ausgewählten Identifizierung durch das Smart Cover, wobei die ausgewählte Identifizierung zum Angeben der ausgewählten realen Karte ausgebildet ist;
Senden der ausgewählten Identifizierung an den reale-Karten-Manager durch das Smart Cover;
Bestimmen der der ausgewählten Identifizierung entsprechenden ausgewählten realen Karte durch den reale-Karten-Manager aus den gemäß der ausgewählten Identifizierung mit dem reale-Karten-Manager verbundenen realen Karten.

8. Verfahren nach einem der Ansprüche 1 bis 7, wobei der reale-Karten-Manager den Lese- und Schreibzugriff auf die reale-Karten-Informationen der mit dem reale-Karten-Manager verbundenen realen Karten je nach Sicherheitsstufe der realen Karten EIN- und/oder AUSschaltet.

9. Verfahren nach einem der Ansprüche 1 bis 8, wobei das Smart Cover ein mobiles Gerät ist.

10. Verfahren nach einem der Ansprüche 1 bis 8, wobei das Smart Cover eine Kombination aus einem mobilen Gerät und einem elektronischen Signatur-Token ist.

11. Verfahren nach einem der Ansprüche 1 bis 8, wobei das Smart Cover ein elektronisches Signatur-Token ist.

12. Dateninteraktionssystem, umfassend eine Simulationskarte, ein Smart Cover und einen reale-Karten-Manager, wobei
das Smart Cover zum Erhalten einer reale-Karten-Informationsliste von dem Smart-Cover-Ende, zum Abrufen der reale-Karten-Informationsliste von dem Smart-Cover-Ende, zum Empfangen einer reale-Karten-Auswahlanweisung und zum Bestimmen einer ausgewählten realen Karte ausgebildet ist, wobei die reale-Karten-Informationsliste von dem Smart-Cover-Ende eine reale-Karten-Informationsliste von dem reale-Karten-Manager-Ende ist, die das Smart Cover von dem reale-Karten-Manager erhalten hat, und wobei die reale-Karten-Informationsliste von dem reale-Karten-Manager-Ende reale-Karte-Informationen von den mit dem reale-Karten-Manager verbundenen realen Karten aufweist;
die Simulationskarte zum Empfangen von durch ein Transaktionsgerät gesendeten ersten Daten und zum Senden der ersten Daten an das Smart Cover ausgebildet ist; das Smart Cover des Weiteren zum Abrufen der ersten Daten, zum Empfangen einer Bestätigungsanweisung zum Bestätigen der Richtigkeit der ersten Daten und zum Senden der ersten Daten an den reale-Karten-Manager ausgebildet ist; und der reale-Karten-Manager zum Empfangen der durch das Smart Cover gesendeten ersten Daten und zum Senden der ersten Daten an die ausgewählte reale Karte ausgebildet ist;
das Smart Cover des Weiteren zum Aufbauen einer sicheren Verbindung mit dem reale-Karten-Manager und zur sicheren Datenübertragung zwischen dem Smart Cover und dem reale-Karten-Manager zum Erhalten eines zweiten sicheren Übertragungsschlüssels des Smart-Cover-Endes ausgebildet ist;
der reale-Karten-Manger des Weiteren zum Aufbauen einer sicheren Verbindung mit dem Smart Cover und zur sicheren Datenübertragung zwischen dem Smart Cover und dem reale-Karten-Manager zum Erhalten eines sicheren Übertragungsschlüssels des reale-Karten-Manager-Endes ausgebildet ist,
das Smart Cover des Weiteren, bevor die sichere Verbindung zwischen dem Smart Cover und dem reale-Karten-Manager aufgebaut ist, zum Senden einer Login-Anfrage an den reale-Karten-Manager und, nachdem die sichere Verbindung zwischen dem Smart Cover und dem reale-Karten-Manager aufgebaut wurde, zum Durchführen einer ersten Verarbeitung eines empfangenen Login-Passwortes unter Verwendung des zweiten sicheren Übertragungsschlüssels des Smart-Cover-Endes, um ein erstes verarbeitetes Passwort zu erhalten, und zum Senden des ersten verarbeiteten Login-Passwortes an den reale-Karten-Manager ausgebildet ist;
der reale-Karten-Manager des Weiteren zum Empfangen von von dem Smart Cover gesendeten Daten, zum Durchführen einer zweiten Verarbeitung der empfangenen Daten unter Verwendung des sicheren Übertragungsschlüssels des reale-Karten-Manager-Endes, um zweite verarbeitete Daten zu erhalten, und zum Überprüfen der Richtigkeit der zweiten verarbeiteten Daten ausgebildet ist;
das Smart Cover des Weiteren, nachdem der reale-Karten-Manager bestätigt hat, dass die zweiten verarbeiteten Daten die Überprüfung bestanden haben, zum Einloggen in den reale-Karten-Manager ausgebildet ist,
wobei der reale-Karten-Manager zum Durchführen der zweiten Verarbeitung der empfangen Daten unter Verwendung des sicheren Übertragungsschlüssels des reale-Karten-Manager-Endes und zum Überprüfen der Richtigkeit der zweiten verarbeiteten Daten durch folgende Schritte ausgebildet ist,
Durchführen der zweiten Verarbeitung der empfangenen Daten unter Verwendung des sicheren Übertragungsschlüssels des reale-Karten-Manager-Endes, um ein zu überprüfendes Passwort zur erhalten;
Bestimmen, ob das zu überprüfende Passwort ein Alarmpasswort ist;
wenn das zu überprüfende Passwort ein Alarmpasswort ist, Auslösen eines Alarms, nachdem bestätigt wurde, dass das zu überprüfende Passwort erfolgreich war; wenn das zu überprüfende Passwort ein Login-Passwort und kein Alarmpasswort ist, Bestimmen, dass das zu überprüfende Passwort die Überprüfung besteht.

## Revendications

1. Procédé d'interaction des données, comprenant les étapes suivantes :
obtenir une liste d'informations sur des cartes réelles d'un bout de smart cover par un smart cover, dans lequel la liste d'informations sur les cartes réelles du bout de smart cover est une liste d'informations sur les cartes réelles d'un bout de gestionnaire des cartes réelles que le smart cover a obtenue d'un gestionnaire des cartes réelles, et dans lequel la liste d'informations sur les cartes réelles du bout de gestionnaire des cartes réelles comprend des informations sur des cartes réelles des cartes réelles connectées au gestionnaire des cartes réelles ;
consulter la liste d'informations sur les cartes réelles du bout de smart cover par le smart cover ;
recevoir une instruction de sélectionner une carte réelle par le smart cover, déterminer une carte réelle sélectionnée par le smart cover ;
recevoir des premières données envoyées à partir d'un terminal de transaction par une carte de simulation et envoyer les premières données au smart cover par la carte de simulation ;
consulter les premières données par le smart cover, recevoir une instruction de confirmation pour confirmer l'exactitude des premières données par le smart cover et
envoyer les premières données au gestionnaire des cartes réelles par le smart cover ; et
recevoir les premières données envoyées à partir du smart cover par le gestionnaire des cartes réelles et envoyer les premières données à la carte réelle sélectionnée par le gestionnaire des cartes réelles,
dans lequel, le procédé comprend en outre les étapes suivantes :
établir une connexion sécurisée entre le smart cover et le gestionnaire des cartes réelles et obtenir une deuxième clé de transmission sécurisée du bout de smart cover et une clé de transmission sécurisée du bout de gestionnaire des cartes réelles pour une transmission de données sécurisée entre le smart cover et le gestionnaire des cartes réelles,
dans lequel, avant l'établissement d'une connexion sécurisée entre le smart cover et le gestionnaire des cartes réelles, le procédé comprend en outre l'étape suivante :
envoyer une demande de connexion au gestionnaire des cartes réelles par le smart cover ; et,
après l'établissement d'une connexion sécurisée entre le smart cover et le gestionnaire des cartes réelles, comprenant les étapes suivantes :
effectuer un premier traitement d'un mot de passe de connexion reçu par le smart cover en utilisant la deuxième clé de transmission sécurisée du bout de smart cover pour obtenir un premier mot de passe traité et envoyer le premier mot de passe de connexion traité au gestionnaire des cartes réelles par le smart cover ;
recevoir des données envoyées à partir du smart cover par le gestionnaire des cartes réelles, effectuer un deuxième traitement des données reçues par le gestionnaire des cartes réelles en utilisant la clé de transmission sécurisée du bout de gestionnaire des cartes réelles pour obtenir des deuxièmes données traitées et vérifier l'exactitude des deuxièmes données traitées par le gestionnaire des cartes réelles ;
après que le gestionnaire des cartes réelles ait vérifié que les deuxièmes données traitées ont passé la vérification, provoquant que le smart cover se connecte au gestionnaire des cartes réelles,
dans lequel effectuer un deuxième traitement des données reçues par le gestionnaire des cartes réelles en utilisant la clé de transmission sécurisée du bout de gestionnaire des cartes réelles pour obtenir des deuxièmes données traitées et vérifier l'exactitude des deuxièmes données traitées par le gestionnaire des cartes réelles comprend :
effectuer le deuxième traitement des données reçues par le gestionnaire des cartes réelles en utilisant la clé de transmission sécurisée du bout de gestionnaire des cartes réelles pour obtenir un mot de passe à vérifier ;
déterminer par le gestionnaire des cartes réelles si le mot de passe à vérifier est un mot de passe d'alarme ;
si le mot de passe à vérifier est un mot de passe d'alarme, effectuer une opération d'alarme par le gestionnaire des cartes réelles après avoir vérifié que le mot de passe à vérifier a eu du succès ;
si le mot de passe à vérifier est un mot de passe de connexion et non pas un mot de passe d'alarme, déterminer par le gestionnaire des cartes réelles que le mot de passe à vérifier passe la vérification.

2. Procédé selon la revendication 1, comprenant en outre les étapes suivantes :
établir une deuxième connexion entre le smart cover et la carte de simulation et obtenir une première clé de transmission sécurisée du bout de smart cover et une clé de transmission sécurisée du bout de la carte de simulation pour une transmission de données sécurisée entre le smart cover et la carte de simulation.

3. Procédé selon la revendication 2, avant l'établissement d'une connexion sécurisée entre le smart cover et la carte de simulation, comprenant en outre l'étape suivante :
effectuer une opération de liaison entre le smart cover et la carte de simulation.

4. Procédé selon la revendication 1, avant l'établissement d'une connexion sécurisée entre le smart cover et le gestionnaire des cartes réelles, comprenant en outre l'étape suivante :
effectuer une opération de liaison entre le smart cover et le gestionnaire des cartes réelles.

5. Procédé selon la revendication 1, comprenant en outre les étapes suivantes :
détecter les cartes réelles connectées au gestionnaire des cartes réelles par le gestionnaire des cartes réelles ;
après le gestionnaire des cartes réelles détecte les cartes réelles connectées au gestionnaire des cartes réelles, obtenir des informations sur les cartes réelles des cartes réelles par le gestionnaire des cartes réelles, dans lequel les informations sur les cartes réelles comprennent au moins un numéro de carte ;
après le gestionnaire des cartes réelles obtient les informations sur les cartes réelles des cartes réelles, générer la liste d'informations sur les cartes réelles du bout de gestionnaire des cartes réelles par le gestionnaire des cartes réelles.

6. Procédé selon la revendication 5, comprenant en outre l'étape suivante :
générer une liste d'identifications du bout de gestionnaire des cartes réelles par le gestionnaire des cartes réelles, dans lequel les identifications dans la liste d'identifications du bout de gestionnaire des cartes réelles correspondent exactement aux informations sur les cartes réelles dans la liste des informations sur les cartes réelles du bout de gestionnaire des cartes réelles.

7. Procédé selon la revendication 1, dans lequel recevoir une instruction de sélectionner une carte réelle par le smart cover et déterminer une carte réelle sélectionnée par le smart cover comprend les étapes suivantes :
recevoir l'instruction de sélectionner une carte réelle par le smart cover et obtenir une identification sélectionnée par le smart cover, dans lequel l'identification sélectionnée est configurée pour indiquer la carte réelle sélectionnée ;
envoyer l'identification sélectionnée au gestionnaire des cartes réelles par le smart cover ;
déterminer la carte réelle sélectionnée correspondant à l'identification sélectionnée par le gestionnaire des cartes réelles à partir des cartes réelles connectées au gestionnaire des cartes réelles en fonction de l'identification sélectionnée.

8. Procédé selon l'une quelconque des revendications 1 à 7, dans lequel le gestionnaire des cartes réelles met en MARCHE et/ou ARRÊTE l'accès en lecture et en écriture aux informations sur les cartes réelles des cartes réelles connectées au gestionnaire des cartes réelles en fonction des niveaux de sécurité des cartes réelles.

9. Procédé selon l'une quelconque des revendications 1 à 8, dans lequel le smart cover est un dispositif mobile.

10. Procédé selon l'une quelconque des revendications 1 à 8, dans lequel le smart cover est une combinaison d'un dispositif mobile et d'un jeton de signature électronique.

11. Procédé selon l'une quelconque des revendications 1 à 8, dans lequel le smart cover est un jeton de signature électronique.

12. Système d'interaction des données, comprenant une carte de simulation, un smart cover et un gestionnaire des cartes réelles, dans lequel,
le smart cover est configuré pour obtenir une liste d'informations sur les cartes réelles du bout de smart cover, pour consulter la liste d'informations sur les cartes réelles du bout de smart cover, pour recevoir une instruction de sélectionner une carte réelle et pour déterminer une carte réelle sélectionnée, dans lequel la liste d'informations sur les cartes réelles du bout de smart cover est une liste d'informations sur les cartes réelles du bout de gestionnaire des cartes réelles que le smart cover a obtenue du gestionnaire des cartes réelles, et dans lequel la liste d'informations sur les cartes réelles du bout de gestionnaire des cartes réelles comprend des informations sur les cartes réelles des cartes réelles connectées au gestionnaire des cartes réelles ;
la carte de simulation est configurée pour recevoir des première données envoyées par un terminal de transaction et pour envoyer les premières données au smart cover ;
le smart cover est en outre configuré pour consulter les premières données, pour recevoir une instruction de confirmation de l'exactitude des premières données et pour envoyer les premières données au gestionnaire des cartes réelles ; et
le gestionnaire des cartes réelles est configuré pour recevoir les premières données envoyées par le smart cover et pour envoyer les premières données à la carte réelle sélectionnée ;
le smart cover est en outre configuré pour établir une connexion sécurisée avec le gestionnaire des cartes réelles et pour obtenir une deuxième clé de transmission sécurisée du bout de smart cover pour une transmission de données sécurisée entre le smart cover et le gestionnaire des cartes réelles ;
le gestionnaire des cartes réelles est en outre configuré pour établir une connexion sécurisée avec le smart cover et pour obtenir une clé de transmission sécurisée du bout de gestionnaire des cartes réelles pour une transmission des données sécurisée entre le smart cover et le gestionnaire des cartes réelles,
le smart cover est en outre configuré, avant l'établissement de la connexion sécurisée entre le smart cover et le gestionnaire des cartes réelles, pour envoyer une demande de connexion au gestionnaire des cartes réelles ; et, après l'établissement de la connexion sécurisée entre le smart cover et le gestionnaire des cartes réelles, pour effectuer un premier traitement d'un mot de passe de connexion reçu en utilisant la deuxième clé de transmission sécurisée du bout de smart cover pour obtenir un premier mot de passe traité et envoyer le premier mot de passe de connexion traité au gestionnaire des cartes réelles ;
le gestionnaire des cartes réelles est en outre configuré pour recevoir des données envoyées à partir du smart cover, pour effectuer un deuxième traitement des données reçues en utilisant la clé de transmission sécurisée du bout de gestionnaire des cartes réelles pour obtenir des deuxièmes données traitées et vérifier l'exactitude des deuxièmes données traitées ;
le smart cover est en outre configuré, après que le gestionnaire des cartes réelles ait vérifié que les deuxièmes données traitées ont passé la vérification, pour se connecter au gestionnaire des cartes réelles,
dans lequel le gestionnaire des cartes réelles est configuré pour effectuer un deuxième traitement des données reçues en utilisant la clé de transmission sécurisée du bout de gestionnaire des cartes réelles et pour vérifier l'exactitude des deuxièmes données traitées, en :
effectuant le deuxième traitement des données reçues en utilisant la clé de transmission sécurisée du bout de gestionnaire des cartes réelles pour obtenir un mot de passe à vérifier ;
déterminant si le mot de passe à vérifier est un mot de passe d'alarme ;
effectuant une opération d'alarme, si le mot de passe à vérifier est un mot de passe d'alarme, après avoir vérifié que le mot de passe à vérifier a eu du succès,
déterminant que le mot de passe à vérifier passe la vérification si le mot de passe à vérifier est un mot de passe de connexion et non pas un mot de passe d'alarme.
